# EUROPEAN PATENT SPECIFICATION

(11) **EP 1 541 311 B1**
(45) Date of publication and mention of the grant of the patent: **30.11.2011**
(21) Application number: 03738652.1
(22) Date of filing: 02.07.2003
(51) Int. Cl.: B28D 5/00, C03B 33/03

(54) **PASTED BASE BOARD CUTTING SYSTEM AND BASE BOARD CUTTING METHOD**
SYSTEM ZUM SCHNEIDEN VON GEKLEBTEN GRUNDPLATTEN UND GRUNDPLATTENSCHNEIDVERFAHREN
PROCEDE ET SYSTEME SERVANT A COUPER UN CARTON CONTRECOLLE

(30) Priority: 02.07.2002 JP 2002194004; 26.07.2002 JP 2002218938
(43) Date of publication of application: 15.06.2005
(73) Proprietor: Mitsuboshi Diamond Industrial Co., Ltd., Suita-city, Osaka Pref. 564-0044 (JP)
(72) Inventor: OKAJIMA, Yasutomo c/o MITSUBOSHI DIAMOND IND. CO., Suita-city, Osaka 564-0044 (JP); NISHIO, Yoshitaka c/o MITSUBOSHI DIAMOND IND. CO., Suita-city, Osaka 564-0044 (JP)
(74) Representative: TBK
(86) International application number: PCT/JP2003/008449
(87) International publication number: WO 2004/007164

(56) References cited:
- JP-A- 9 278 470
- JP-A- 9 278 473
- JP-A- 10 209 086

## Description

The present invention relates to a substrate cutting system and a substrate cutting method according to the preamble of claim 1 and claim 17, respectively. They are used for cutting brittle material substrates such as glass substrates, ceramics, semiconductor wafers and the like used for flat panel displays (hereinafter, referred to as FPDs).

The present specification describes cutting mother glass substrates for FPDs such as display panels of liquid crystal display apparatuses, which are classified as glass substrates, a type of brittle material glass substrate, as an example.

Liquid crystal display apparatuses include display panels with liquid crystal injected between pairs of glass substrates bonded to each other. Recently, such display panels are produced by cutting large-sized mother glass substrates bonded to each other into pieces having a predetermined size.

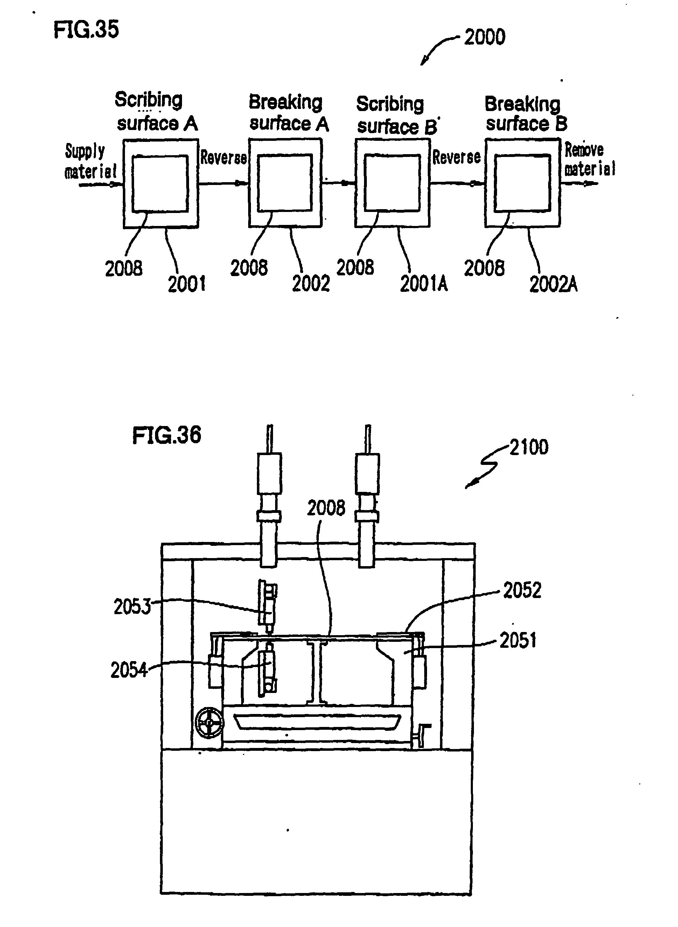

Figure 35 is a block diagram of a substrate cutting system **2000** used for producing display panels of liquid crystal display apparatuses. The substrate cutting system **2000** is for cutting a mother bonded substrate 2008, which is formed by bonding a pair of mother glass substrates to each other. The substrate cutting system 2000 has: a first scribing apparatus 2001 for scribing one mother glass substrate of the mother bonded substrate 2008; a first breaking apparatus 2002 for breaking (cutting) the mother glass substrate scribed by the first scribing apparatus 2001; a second scribing apparatus 2001A for scribing the other mother glass substrate; and a second breaking apparatus 2002A for breaking (cutting) the mother glass substrate scribed by the second scribing apparatus 2001A.

In the first scribing apparatus 2001, the mother bonded substrate 2008 is carried in a horizontal manner. Scribing lines are formed on a mother glass substrate of the upper side by, for example, a cutter wheel. Then, the mother bonded substrate 2008 is reversed upside down (an upper surface and a lower surface are switched) by a reverse apparatus (not shown), and transferred to the first breaking apparatus 2002. The first breaking apparatus 2002 applies pressure by breaking bars on a surface of the mother glass substrate on which scribing lines are not formed at the positions opposing the scribing lines. Thus, the mother glass substrate with the scribing lines formed thereon is cut along the scribing lines.

Then, the mother bonded substrate is carried to the second scribing apparatus 2001A as it is. The second scribing apparatus 2001A and the second breaking apparatus 2002A have similar structures as those of the first scribing apparatus 2001 and the first breaking apparatus 2002. In the second scribing apparatus 2001A, scribing lines are formed on the mother glass substrate which has not been cut by, for example, a cutter wheel. The mother bonded substrate 2008 is reversed upside down by a reverse apparatus (not shown), and carried to the second breaking apparatus 2002A. The second breaking apparatus 2002A cuts the mother glass substrate along the scribing lines formed by the second scribing apparatus 2001A.

Figure 36 shows a structure of another conventional scribing apparatus 2100. The scribing apparatus 2100 includes a table 2051 where both ends of the mother bonded substrate 2008 are to be placed. A securing body 2052 for securing the mother bonded substrate 2008 is attached to the table 2051. The scribing apparatus 2100 includes a pair of cutter heads 2053 and 2054 provided so as to sandwich the mother bonded substrate 2008 from the upper and lower sides.

In the scribing apparatus 2100 having such a structure, when the mother bonded substrate 2008 is secured on the table 2051 by the securing body 2052, the pair of cutter heads 2053 and 2054 scribe an upper surface and a lower surface of the mother bonded substrate 2008 at the same time.

In the substrate cutting system 2000 shown in Figure 35, the upper surface and the lower surface of the mother bonded substrate 2008 has to be reversed in order to scribe and then break the mother glass substrates of the mother bonded substrate 2008. Further, the mother bonded substrate 2008 has to be positioned every time when the mother bonded substrate 2008 is carried to the next apparatus. Therefore, some of the substrates in the mother bonded substrate may undesirably be fallen or the mother bonded substrate may undesirably be damaged while the mother bonded substrate is being carried for carrying, reversing or positioning the mother bonded substrate under process. Also, scribing steps and breaking steps must be carried out independently for each of the mother glass substrates. Thus, the operating efficiency is remarkably deteriorated. Moreover, since the scribing steps and the breaking steps are carried out for each of the mother glass substrates, separate apparatuses are required for each of the mother glass substrates. Recently, the size of the mother bonded substrate is becoming larger. Thus, a large space is necessary for installing such apparatuses. This compromises the economical efficiency.

In the scribing apparatus 2100 of Figure 36, a breaking apparatus for cutting the mother bonded substrate 2008 scribed by the scribing apparatus 2100 is required separately. Further, a carrying apparatus for supplying the mother bonded substrate 2008 scribed by the scribing apparatus 2100 to the breaking apparatus is also required. This causes a problem that the operating efficiency is deteriorated and the economical efficiency is compromised.

JP 09 278470 A discloses a generic substrate cutting system according to the preamble of claim 1 and a generic substrate cutting method according to the preamble of claim 17.

Further substrate cutting systems are known from JP 10 209086 A and JP 09 278473 A.

It is an object of the present invention to provide a substrate cutting system which has a compact structure and can out the substrates efficiently by an apparatus which performs both the scribing steps and the breaking steps, thereby solving the above-described problem.

A system for cutting a substrate of the bonded substrate according to the present invention is a substrate cutting system for cutting a bonded substrate formed by bonding a first substrate and a second substrate into a plurality of out substrates, comprising; a first cutting device located so as to face the first substrate; a second cutting device located so as to face the second substrate; and a cutting apparatus comprising the first cutting device and the second cutting device, wherein the first cutting device comprises a scribing portion for forming a scribing line on the first substrate, the second cutting device comprises a scribing portion for forming a scribing line on the second substrate, the first cutting device further comprises a back up portion for supporting a surface of the first substrate when scribing means of the scribing portion of the second cutting device scribes the second substrate, in correspondence with the portion to be scribed, and the second cutting device further comprises a back up portion for supporting a surface of the second substrate when scribing means of the scribing portion of the first cutting device scribes the first substrate, in correspondence with the portion to be scribed.

Further, the first cutting device further comprises a breaking portion for cutting the first substrate along the scribing line formed on the first substrate; and the second cutting device further comprises a breaking portion for cutting the second substrate along the scribing line formed on the second substrate.

Further, the first cutting device locates the back up portion so as to support a surface of the first substrate when breaking means of the breaking portion of the second cutting device cuts the second substrate, in correspondence with the portion to be cut; and the second cutting device locates the back up portion so as to support a surface of the second substrate when breaking means of the breaking portion of the first cutting device cuts the first substrate, in correspondence with the portion to be out.

Moreover, a substrate carrying apparatus which sequentially positions lines to be cut of the bonded substrate with respect to the cutting apparatus is further included.

Further, the substrate carrying apparatus comprises a plurality of tables.

Further, the tables are independently movable.

Moreover, the tables respectively comprise adsorption holes for adsorbing the bonded substrate.

Moreover, the breaking means provided in each of the breaking portions of the first cutting device and the second cutting device press both sides of the scribing line.

Further, the breaking means are rollers each having a concave portion formed thereon.

Moreover, supporting rollers included in the second cutting device and a belt wound to the supporting rollers are further included, and a portion of the bonded substrate which has been cut is supported as the second cutting device performing a cutting process moves.

Moreover, a plurality of cutting devices are included and the cutting devices are integrally movable in a scribing line direction.

Moreover, a pair of the cutting apparatuses are provided and the substrate carrying apparatus is provided for each of the cutting apparatuses, and a out substrate which has been cut by a cutting device of one of the cutting apparatuses is carried by one of the substrate carrying apparatuses, which corresponds to the cutting apparatus, to the other substrate carrying apparatus to be cut by another cutting device provided in correspondence with the other cutting apparatus.

Further, the substrate carrying apparatuses are provided such that carrying directions for the bonded substrate and the cut substrate by the substrate carrying apparatuses are perpendicular to each other.

Further, the substrate carrying apparatuses carry the bonded substrate with a surface of the bonded substrate being in parallel with the vertical direction; and the first cutting device and the second cutting device of the cutting apparatus cuts the carried bonded substrate along the vertical direction.

Further, a pair of the cutting apparatuses are included and a rotation carrying apparatus for rotating a cut substrate which has been out by one of the cutting apparatuses in a direction perpendicular to the vertical direction is further included, and the cut substrate rotated by the rotation carrying apparatus is cut by the other cutting apparatus along the vertical direction.

Further, a scribing apparatus for forming a terminal portion in the cut substrate which has been out by the other cutting apparatus is further included.

Moreover, a cutting apparatus for forming a terminal portion in the cut substrate which has been out by the other cutting apparatus is further included.

A method for cutting a substrate of the bonded substrate according to the present invention is a substrate cutting method for cutting a bonded substrate formed by bonding a first substrate and a second substrate into a plurality of cut substrates, comprising: a first cutting device located so as to face the first substrate; a second cutting device located so as to face the second substrate; and a cutting apparatus comprising the first cutting device and the second cutting device, wherein the first cutting device supports a surface of the first substrate when the second substrate is scribed by the second cutting device, in correspondence with the portion to be scribed, and the second cutting device supports a surface of the second substrate when the first substrate is scribed by the first cutting device, in correspondence with the portion to be scribed.

Further, the first cutting device supports a surface of the first substrate when the second substrate is cut by breaking means of the breaking portion of the second cutting device, in correspondence with the portion to be cut; and the second cutting device supports a surface of the second substrate when the first substrate is cut by breaking means of the breaking portion of the first cutting device, in correspondence with the portion to be out.

Moreover, lines to be cut of the bonded substrate held by a substrate carrying apparatus are sequentially positioned to predetermined positions with respect to the cutting apparatus, and the bonded substrate is sequentially cut along the lines to be cut.

Further, the substrate carrying apparatus comprises a plurality of tables; and, before the cutting, the number of tables moved is selected in accordance with a cutting pattern of the bonded substrate, spaces between the tables are set such that the second cutting device is moved along a line to be cut of the bonded substrate, and the bonded substrate is held on the selected tables.

Further, the tables holding out substrates sequentially move to a material removing position for the cut substrates after the cutting.

Moreover, the breaking means included in each of the first cutting device and the second cutting device press both sides of the scribing line.

Moreover, a supporting roller included in the second cutting device and a belt wound to the supporting roller are further included, and a portion of the bonded substrate which has been cut is supported as the second cutting device performing a cutting process moves.

Moreover, a plurality of cutting devices are provided, and the cutting devices integrally move and cut the bonded substrate along a plurality of lines to be cut of the bonded substrate.

Moreover, a pair of the cutting apparatuses are provided and the substrate carrying apparatus is provided for each of the cutting apparatuses, and a cut substrate which has been out by a cutting device of one of the cutting apparatuses is carried by one of the substrate carrying apparatuses, which corresponds to the cutting apparatus, to the other substrate carrying apparatus to be cut by another cutting device provided in correspondence with the other cutting apparatus.

Further, the substrate carrying apparatuses are provided such that carrying directions for the bonded substrate and the cut substrate by the substrate carrying apparatuses are perpendicular to each other.

Moreover, the substrate carrying apparatuses carry the bonded substrate with a surface of the bonded substrate being in parallel with the vertical direction; and the first cutting device and the second cutting device of the cutting apparatus cuts the carried bonded substrate along the vertical direction.

Further, a pair of the cutting apparatuses are included and a rotation carrying apparatus for rotating a cut substrate which has been cut by one of the cutting apparatuses in a direction perpendicular to the vertical direction is further included, and the cut substrate rotated by the rotation carrying apparatus is cut by the other cutting apparatus along the vertical direction.

### BRIEF DESCRIPTION OF THE DRAWINGS

Figure 1 is a perspective view showing an example of the substrate cutting systems according to the present invention.
Figure 2 is a perspective view of a substrate carrying apparatus in the substrate cutting system according to the present invention.
Figure 3 is a perspective view showing important portions of the substrate carrying apparatus in the substrate cutting system according to the present invention.
Figure 4 is a plan view of the substrate carrying apparatus in the substrate cutting system according to the present invention.
Figure 5 is a perspective view of a table provided in the substrate carrying apparatus in the substrate cutting system according to the present invention.
Figure 6 is a perspective view of a substrate cutting apparatus in the substrate cutting system according to the present invention.
Figure 7 is a schematic side view of the important portions of the substrate cutting apparatus in the substrate cutting system according to the present invention.
Figure 8 is a side view of a breaking roller used in the cutting apparatus.
Figure 9 is a schematic side view for illustrating operations of the cutting apparatus.
Figure 10 is a perspective view showing a supporting section of the cutting apparatus.
Figure 11 is a schematic plan view for illustrating operations of the substrate cutting system according to the present invention.
Figure 12 is a plan view of a mother bonded substrate.
Figure 13 is a perspective view of a panel substrate cut from the mother bonded substrate.
Figure 14 is a plan view for illustrating sealing portions of the mother bonded substrate.
Figures 15A through 15E are schematic side views showing a cutting process for the mother bonded substrate using the substrate cutting system for the bonded substrate according to the present invention.
Figure 16A through 16E are schematic side views showing a cutting process for the mother bonded substrate using the conventional bonded substrate cutting system.
Figure 17 is a perspective view showing the supporting section of the cutting apparatus.
Figure 18A through 18C are schematic side views for illustrating the supporting section of the cutting apparatus.
Figure 19 is a perspective view showing another example of the substrate cutting systems according to the present invention.
Figure 20 is a perspective view showing the cutting apparatus of Figure 19.
Figure 21 is a schematic perspective view showing still another example of the substrate cutting systems according to the present invention.
Figure 22 is a perspective view showing still another example of the substrate cutting systems according to the present invention.
Figure 23 is a plan view of the substrate cutting system of Figure 22.
Figure 24 is a side view showing a schematic structure of a first carrying mechanism in the substrate cutting system of Figure 22.
Figure 25 is a front view showing a structure of a supporting member.
Figure 26 is a side view of the supporting member.
Figure 27A is a cross-sectional view of a first rotation mechanism in the substrate cutting apparatus; and Figure 27B is a diagram illustrating operations thereof.
Figure 28 is a diagram showing structures of important portions of a scribing apparatus provided in the substrate cutting system.
Figure 29 is a diagram showing structures of important portions of a first unnecessary portion removing mechanism provided in the substrate cutting system.
Figure 30 is a perspective view showing a yet another example of the substrate cutting system.
Figure 31 is a schematic diagram showing a structure of substrate cutting line systems according to the present invention.
Figure 32 is a schematic diagram showing a structure of yet another example of substrate cutting line systems according to the present invention.
Figures 33A through 33E are schematic side views showing a cutting process for the mother bonded substrate.
Figures 34A through 34E are schematic side views showing a cutting process for the mother bonded substrate.
Figure 35 is a schematic diagram showing a structure of a conventional substrate cutting system.
Figure 36 is a front view showing a structure of a conventional scribing apparatus.

### BEST MODE FOR CARRYING OUT THE INVENTION

Hereinafter, embodiments of the present invention will be described in detail with reference to the drawings.

### <Embodiment 1>

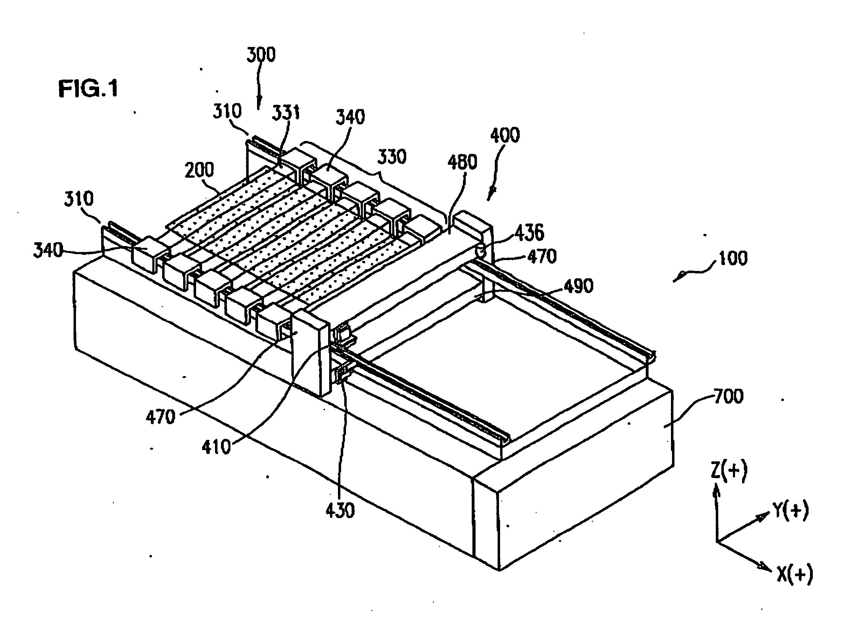

Figure 1 is a perspective view showing an example of embodiments of a substrate cutting system according to the present invention. A substrate cutting system 100 is preferably used for cutting a mother bonded substrate, which are large-sized mother glass substrates bonded to each other, to produce display panels having a predetermined size for producing display panels of liquid crystal display apparatuses. Hereinafter, an example of cutting a mother bonded substrate will be described.

The substrate cutting system 100 shown in Figure 1 includes: a substrate carrying apparatus 300 for carrying the mother bonded substrate 200 in a horizontal manner along a predetermined direction (X direction); and a cutting apparatus 400 for cutting the mother bonded substrate 200 placed on the substrate carrying apparatus 300 in a predetermined direction. The substrate carrying apparatus 300 and the cutting apparatus 400 are provided on a mount 700.

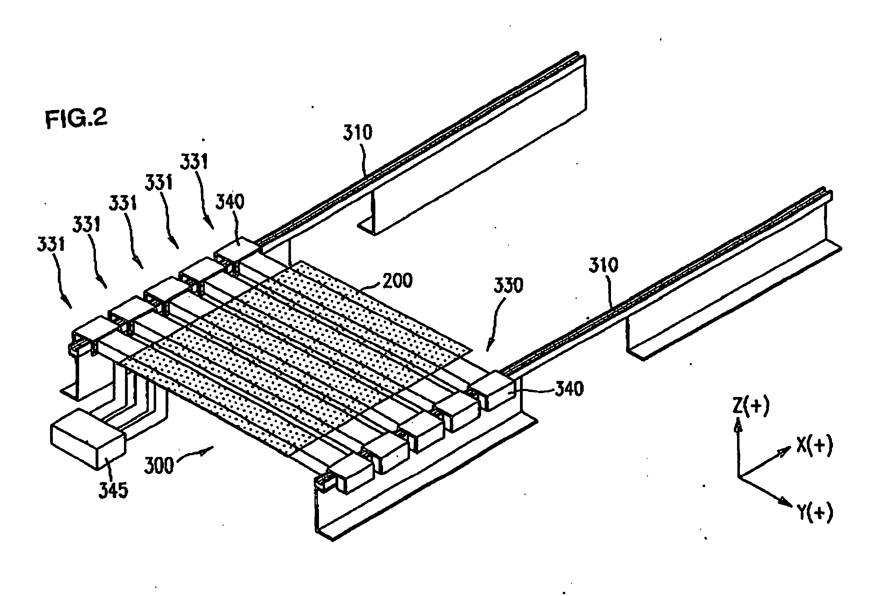

Figure 2 is a perspective view of the substrate carrying apparatus 300 used in the substrate cutting system 100. The substrate carrying apparatus 300 has a pair of rail portions 310 arranged in parallel to each other and a table portion 330 formed by five tables 331 respectively arranged so as to bridge the two rail portions 310. The tables 331 have structures similar to each other, and formed to have plate-like shapes elongated along the direction perpendicular to the rail portions 310.

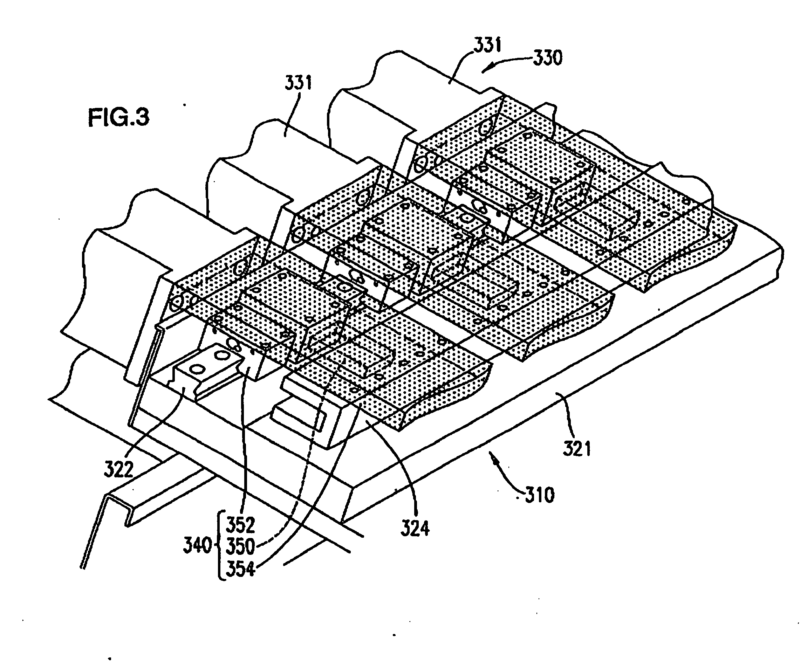

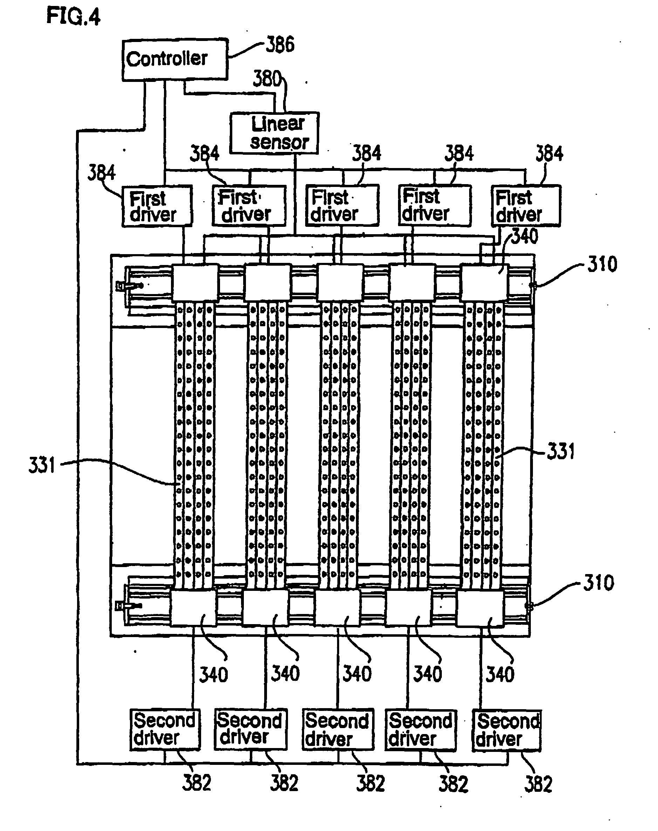

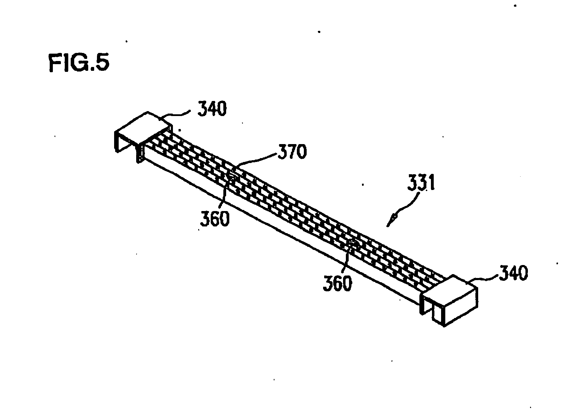

Figure 3 is a perspective view showing important portions of the table portion 330 with a part of a rail portion 310; Figure 4 is a schematic plan view of the table portion 330; and Figure 5 is a perspective view of one table 331 of the table portion 330.

As shown in Figure 3, one rail portion 310 includes a stator 324 of a linear motor arranged linearly on a horizontal support 321. inside the stator 324, a guide rail 322 is provided in parallel with the stator 324. The stator 324 is formed to have a cross-section of a square c-shape opening at the side of the guide rail 322. Magnets are embedded with predetermined intervals in the longitudinal direction. The other rail portion 310 has a similar structure.

On the end of the table 331 in the longitudinal direction, moving parts 340 of the linear motor are provided. Each of the moving parts 340 includes: guide portions 352 slidably fitted to the guide rail 322; connecting members 354 for joining the tables 331 with the guide portions 352; and actuators 350 integrally formed with the guide portions 352. The actuators 350 are formed of electromagnets, and a part of each of them is inserted into the stator 324.

As shown in Figure 4, the actuators 350 provided in the moving parts 340 at one end of the tables 331 are formed such that the polarities of electromagnets are respectively controlled by first drivers 384. The actuators 350 provided in the moving parts 340 at the other end of the tables 331 are formed such that the polarities of electromagnets are respectively controlled by second drivers 382. The first and second drivers 384 and 382 are formed so as to be controlled by a controller 386. The controller 386 switches the polarities of the electromagnets of the actuators 350 foaming the moving parts at the ends of one table 331 in synchronisation to generate a moving magnetic field. Thus, the tables 331 bridging the pair of rail portions 310 are independently moved in parallel along the guide rails 322.

The rail portions 310 include a linear sensor 380 for detecting the positions of the tables 331. The controller 386 controls the movements of the tables 331 based on the positions of the tables 331 detected by the linear sensor 380.

Further, in order to prevent the tables from being twisted while the tables are moving, and to enhance the table positioning precision, it is preferable, for example, to drive the linear motor at one end with position control by using the first drivers 384, and then, based on the result of detecting the torque output, drive the linear motor at the other end with torque control by using the second drivers 382.

As shown in Figure 2, five tables 331 can hold the mother bonded substrate 200 of a predetermined size in a horizontal manner when they are close to each other. Thus, when the five tables 331 are slid together in the X direction, the mother bonded substrate 200 placed on the table portion 330 is carried in the X direction.

As shown in Figure 5, each of the tables 331 includes a pair of substrate support pins 360 for supporting the mother bonded substrate 200 placed on the table portion 330, and are respectively provided in the center parts of the portions which divide the table 331 into three approximately equally in the longitudinal direction. Two substrate support pins 360 provided on one table 331 move up and down together.

On an upper surface of each of the tables 331, a number of suction holes 370 for sucking the substrate when the mother bonded substrate 200 is placed are provided. The suction holes 370 provided on the table 331 are connected to a suction control section 345 (see Figure 2) collectively for every table 331. The suction control section 345 is formed such that it can suck all the suction holes 370 provided on one table 331 to a negative-pressure state for every table. On the table 331, the substrate supported by the substrate support pins 360 is brought in contact with an upper surface of the table 331 by moving the substrate support pins 360 downward. In such a state, by collectively putting all the suction holes 370 to the negative-pressure state by the suction control section 345, the substrate is adsorbed to the table 331. Thus, the substrate on the table 331 can be moved together with the table 331.

As shown in Figure 1, the cutting apparatus 400 for cutting the mother bonded substrate 200 carried by the substrate carrying apparatus 300 is provided on the mount 700 around the middle part in a carrying direction of the substrate carrying apparatus 300. The cutting apparatus 400 has: a first cutting device 410 for cutting the upper mother glass substrate of the mother bonded substrate 200 carried to the predetermined substrate cutting position in a horizontal manner by the substrate carrying apparatus 300; and a second cutting device 430 for cutting the lower mother glass substrate of the mother bonded substrate 200.

The cutting apparatus 400 further includes supporting posts 470 attached to an upper surface of the mount 700 respectively on the sides of the two rail portions 310 of the substrate carrying apparatus 300. Above the rail portions 310, an upper guide portion 480 is provided so as to bridge the upper ends of the supporting posts 470. Similarly, a lower guide portion 490 is provided below the rail portions 310 so as to bridge the lower ends of the supporting posts 470. The upper guide portion 480 and the lower guide portion 490 are provided along the Y direction perpendicular to the rail portions 310 of the substrate carrying apparatus 300.

The first cutting device 410 for cutting the upper mother glass substrate of the mother bonded substrate 200 carried to the predetermined position in a horizontal manner by the substrate carrying apparatus 300 is attached to the upper guide portion 480. The first cutting device 410 is formed such that it can move along the Y direction perpendicular to the carrying direction of the mother bonded substrate 200 by a driving mechanism such as a linear motor provided in the upper guide portion 480. The second cutting device 430 for cutting the lower mother glass substrate of the mother bonded substrate 200 carried to the predetermined position in a horizontal manner by the substrate carrying apparatus 300 is attached to the lower guide portion 490. The second cutting device 430 is formed such that it can move along the Y direction perpendicular to the carrying direction of the mother bonded substrate 200 by a driving mechanism such as a linear motor provided in the lower guide portion 490.

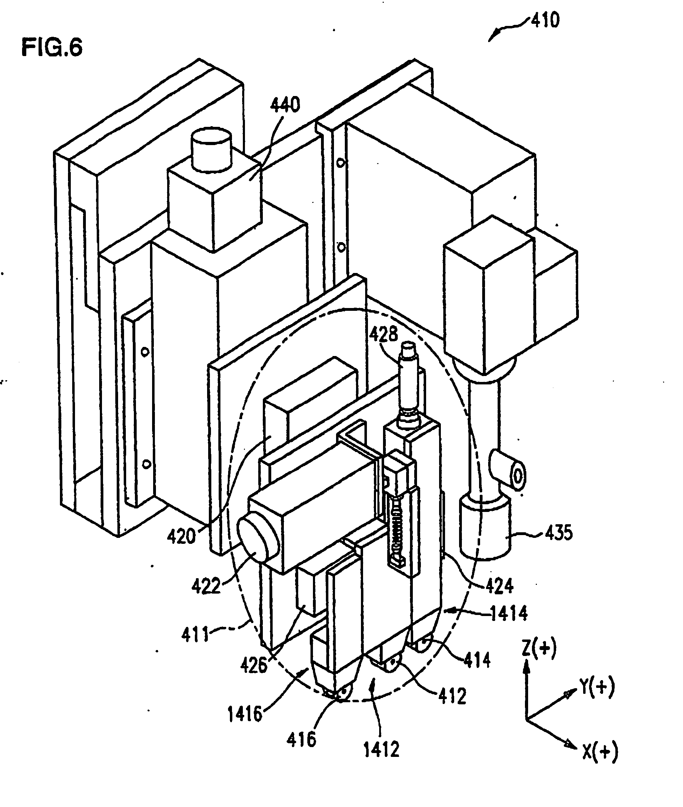

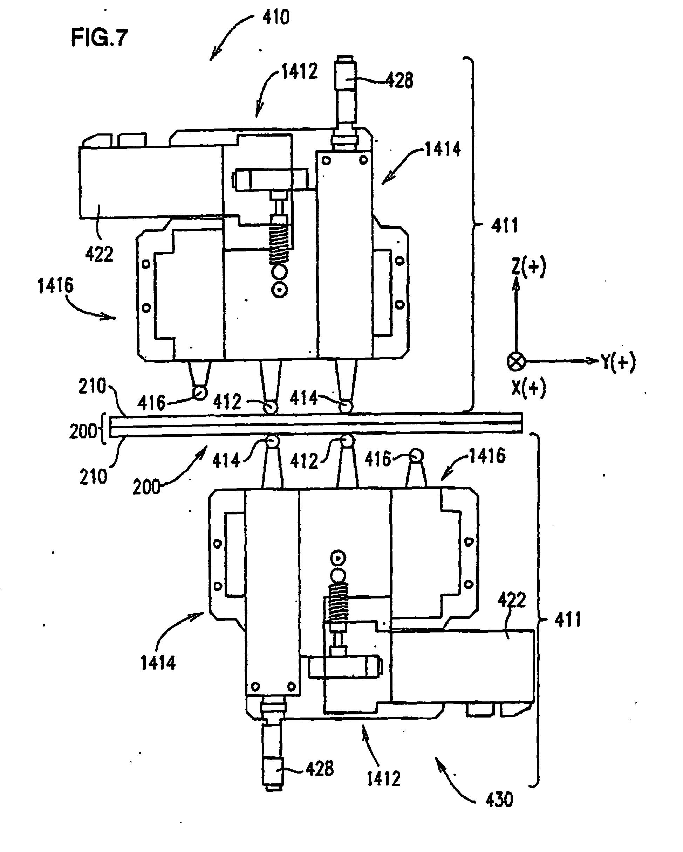

Figure 6 is a perspective view of the first cutting device 410 provided in the cutting apparatus 400; and Figure 7 is a side view of the important portions of the first cutting device 410 and the second cutting device 430. As shown in Figure 6, a cutting unit 411 is attached to the first cutting device 410. As shown in Figure 7, a cutting unit 411 having a similar structure is also attached to the second cutting device 430 with the vertical direction and the Y direction perpendicular to the carrying direction of the mother bonded substrate 200 respectively reversed.

The cutting units 411 are attached such that they can move upward/downward by an ascending/descending mechanism 440 attached to the upper guide portion 480 and the lower guide portion 490. A cutting unit 411 is formed of a scribing portion 1412, a back up portion 1414, and a breaking portion 1416.

In the description below, the case where: the scribing portion 1412 of the cutting unit 411 includes a cutter wheel 412 as a scribing means which is pressed and rolled on a surface of the mother bonded substrate 200 carried to the predetermined position by the substrate carrying apparatus 300 to form scribing lines; the breaking portion 1416 adjacent to the scribing portion 1412 in the Y axis direction perpendicular to the carrying direction for the mother bonded substrate 200 includes a breaking roller 416 which presses a surface of the mother bonded substrate 200 as a breaking means; and the back up portion 1414 adjacent to the scribing portion 1412 in the Y axis direction perpendicular to the carrying direction for the mother bonded substrate 200 at the opposite side to the breaking portion 1416 includes a back up roller 414 as a substrate support means for the mother bonded substrate 200, is explained as an example.

The cutter wheel 412 may be a cutter wheel disclosed in Japanese Patent No. 3074143. The cutter wheel 412 is pressed to the surface of the mother bonded substrate 200 and rolled. Thus, scribing lines, which are lines of vertical cracks, run across substantially the entire lengths in the thickness direction of the mother glass substrates forming the mother bonded substrate 200. The cutter wheel 412 is located such that a rotation axis extends along the X axis direction, which is the carrying direction for the mother bonded substrate 200. When the cutting unit 411 moves along the Y axis direction, the cutter wheel 412 is pressed and rolled on the surface of the mother bonded substrate 200 to form scribing lines, which are lines of vertical cracks, on the two mother glass substrates forming the mother bonded substrate 200. The cutter wheel 412 moves in a vertical direction by the rotation of a servo motor 422. Thus, the cutter wheel 412 can press the surface of the mother bonded substrate 200 with a predetermined pressure. A scribing head which transmits driving torque of the servo motor 422 as a scribing pressure of the cutter wheel 412 drives the servo motor 422 with position control to move the cutter wheel 412 upward/downward. The scribing head also controls the driving torque of the servo motor 422 which tries to return the cutter wheel 412 to the previously-set position when it is shifted to transmit the driving torque to the cutter wheel 412 as the scribing pressure. The previously-set position of the cutter wheel 412 is lower (higher) than the upper (lower) surface of the mother bonded substrate 200. At approximately the same time as when the scribing started, the position is set to be a predetermined position which is further below (above).

The breaking roller 416 included in the first cutting device 410 is located on the side opposite to the direction in which the cutter wheel 412 presses and rolls on the upper surface of the mother bonded substrate 200 with respect to the cutter wheel 412 (the side opposite to the Y direction shown by an arrow in Figure 7). The breaking roller 416 included in the second cutting device 430 is located in the direction in which the cutter wheel 412 presses and rolls on the lower surface of the mother bonded substrate 200 with respect to the cutter wheel 412 (Y direction shown by an arrow in Figure 7).

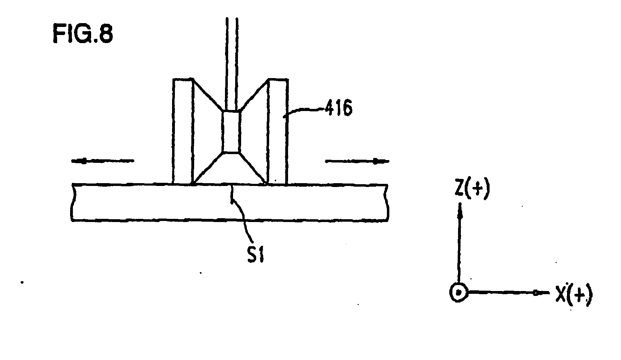

Figure 8 shows a structure of the breaking roller 416. The breaking roller 416 is located such that the rotation axis extends along the Y direction which is the carrying direction for the mother bonded substrate 200. The center portion in the axis direction is recessed into a concave shape. Thus, the breaking roller 416 is pressed and rolled on surface portions on both sides of the scribing line S1 formed on the surface of the mother glass substrate of the upper side of the mother bonded substrate 200 by the cutter wheel 412. When the breaking roller 416 is pressed and rolled on both sides of the scribing line S1, the upper mother glass substrate on both sides sandwiching the scribing line S1 are strained to both sides and the vertical crack can be extended across the entire length in the thickness direction of the mother glass substrate. The breaking roller 416 in the second cutting device 430 has a similar structure and works similarly on the lower mother glass substrate. The lower mother glass substrate is cut along the scribing line formed thereon.

The breaking roller 416 is formed of an elastic body such as rubber and the like. Since the breaking roller 416 is formed of an elastic body such as rubber and the like, the breaking roller 416 is deformed when it is pressed on the surface of the substrate. Accompanying such deformation, forces are applied in directions to push out the substrates on the both sides of the scribing line. Thus, it is ensured that the substrate is broken.

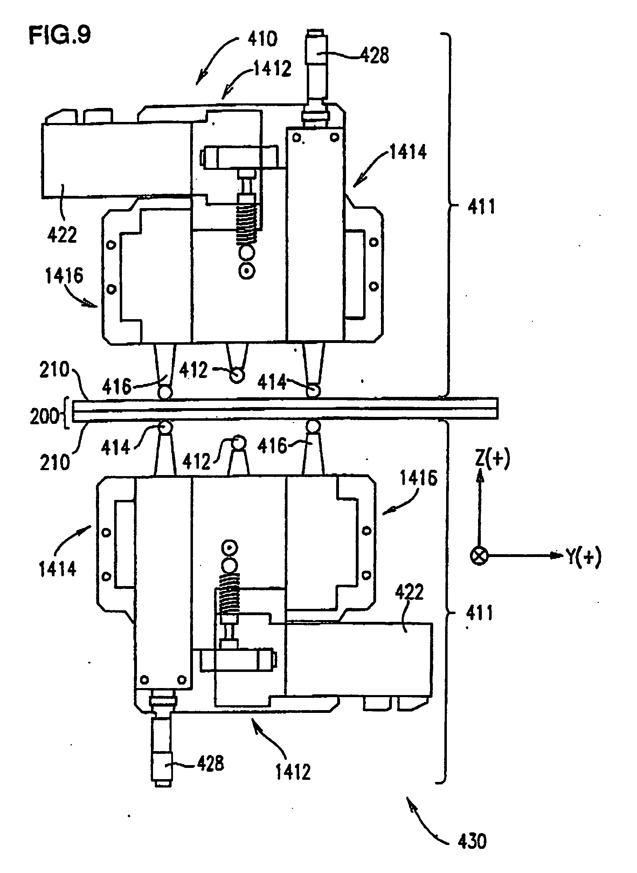

The back up roller 414 of the cutting unit 411 provided in the first cutting device 410 is provided on the opposite side of the breaking roller 416 with the cutter wheel 412 between them. The back up roller 414 can move upward/downward by, for example, a back up roller ascending/descending portion 424 formed of an air cylinder, and presses the surface of the mother bonded substrate 200 with an appropriate pressure. A roller position adjustment portion 428 can vertically adjust the position where the back up roller 414 is in contact with the mother bonded substrate 200. As shown in Figure 9, the back up roller 414 opposes the breaking roller 416 of the cutting unit 411 provided in the second cutting device 430 located on the lower side (see Figure 8) when the lower mother substrate 210 of the mother bonded substrate 200 is broken by the breaking roller 416 of the cutting unit 411 in the second cutting device 430. The back up roller 414 is pressed to the surface of the upper mother glass substrate 210 of the mother bonded substrate 200. This means that the back up roller 414 backs up the pressure force applied to the mother bonded substrate 200 by the lower breaking roller 416 to support the mother bonded substrate 200.

As shown in Figure 9, the back up roller 414 of the cutting unit 411 provided in the second cutting device 430 opposes the breaking roller 416 of the cutting unit 411 provided in the first cutting device 410 located on the upper side (see Figure 8) when the upper mother substrate 210 of the mother bonded substrate 200 is broken by the breaking roller 416 of the cutting unit 411 in the first cutting device 410. The back up roller 414 is pressed to the surface of the lower mother glass substrate 210 of the mother bonded substrate 200. This means that the back up roller 414 backs up the pressure force applied to the mother bonded substrate 200 by the upper breaking roller 416 to support the mother bonded substrate 200.

The cutting unit 411 of the second cutting device 430 located on the lower side has a structure which is reversed in both the vertical direction and the direction perpendicular to the carrying direction of the substrate from that of the cutting unit 411 of the first cutting device 410.

As shown in Figure 6, the first cutting device 410 includes a first camera 435 for imaging an alignment mark which is previously provided on the mother bonded substrate 200 carried to the predetermined position by the substrate carrying apparatus 300. Further, as shown in Figure 1, a second camera 436 for imaging an alignment mark different from the alignment mark imaged by the first camera 435 previously provided on the mother bonded substrate 200 carried to the predetermined position (imaging position for the alignment mark) by the substrate carrying apparatus 300 is provided so as to be movable in the Y direction.

The first camera 435 and the second camera 436 move from the predetermined standby positions and respectively image different alignment marks previously provided on the mother bonded substrate 200 carried (to the imaging positions for the alignment marks) by the substrate carrying apparatus 300. Then, the relative positions of the mother bonded substrate 200 and the cutting apparatus 400 are calculated based on the image data of the imaged alignment marks.

More specifically, the center positions of the alignment marks when the first camera 435 and the second camera 436 capture the alignment marks of the mother bonded substrate 200 are previously set as reference positions. When the mother bonded substrate 200 is actually carried to the alignment imaging position, amounts of gaps between the center positions of the alignment marks respectively captured by the first camera 435 and the second camera 436 and the above-described reference positions in the X axis and Y axis directions are calculated by using an image processing apparatus which is not shown. Based on the result of the calculation, a shift of the mother bonded substrate 200 in the Y direction and the scribing start position and the scribing end position which are end surfaces of the mother bonded substrate 200 are calculated.

The movement of the first cutting device 410 and the second cutting device 430 in the Y direction and the movement of the table portion 330 of the substrate carrying apparatus 300 in the X direction are respectively controlled and linearly interpolated. In this way, even when the mother bonded substrate 200 is not carried in a predetermined position to the table portion 330 (the substrate is shifted to some degree), the mother bonded substrate 200 can be cut along the planned cutting lines.

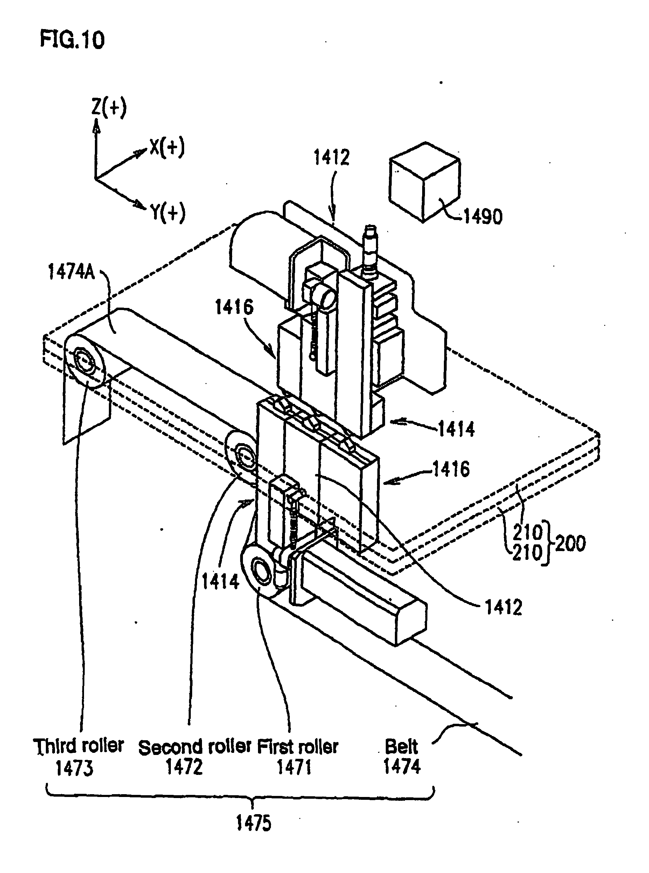

Figure 10 is a partial perspective view showing a supporting section 1475 of the cutting apparatus 400. In order to clearly show that the supporting section 1475 is operated when the first cutting device 410 and the second cutting device 430 are moved in the Y direction, the mother bonded substrate 200 is indicated by a broken line.

The supporting section 1475 includes: a first roller 1471; a second roller 1472; a third roller 1473; and a belt 1474 passing through the first roller 1471, the second roller 1472, and the third roller 1473. The belt 1474 is preferably made of steel.

When the surface of the mother bonded substrate 200 is scribed and broken by using the first cutting device 410 and the second cutting device 430, cullet powder is generated. The cutting apparatus 400 further includes an air section 1490 for blowing compressed air to the cullet powder generated during scribing and breaking and piled up on the belt 1474 for cleaning.

A belt 1474A between the second roller 1472 and the third roller 1473 is located so as to be in contact with the lower mother glass substrate 210. In this way, the belt 1474A supports the mother bonded substrate 200. Thus, when the mother bonded substrate 200 is out, a part of the mother bonded substrate 200 can be prevented from falling, or unnecessary cracks generated in an uncontrollable direction from portions where the scribing lines to be used for cutting are formed can be prevented. Therefore, the cutting apparatus 400 can cut the upper mother glass substrate 210 and the lower mother glass substrate 210 stably along the scribing lines.

When the first cutting device 410 and the second cutting device 430 of the cutting apparatus 400 are moved along the Y axis direction, the third roller 1473 is secured while the first roller 1471 and the second roller 1472 moves along the Y axis direction with the second cutting device 430. In other words, the first roller 1471 and the second roller 1472 are integrally provided with the second cutting device 430.

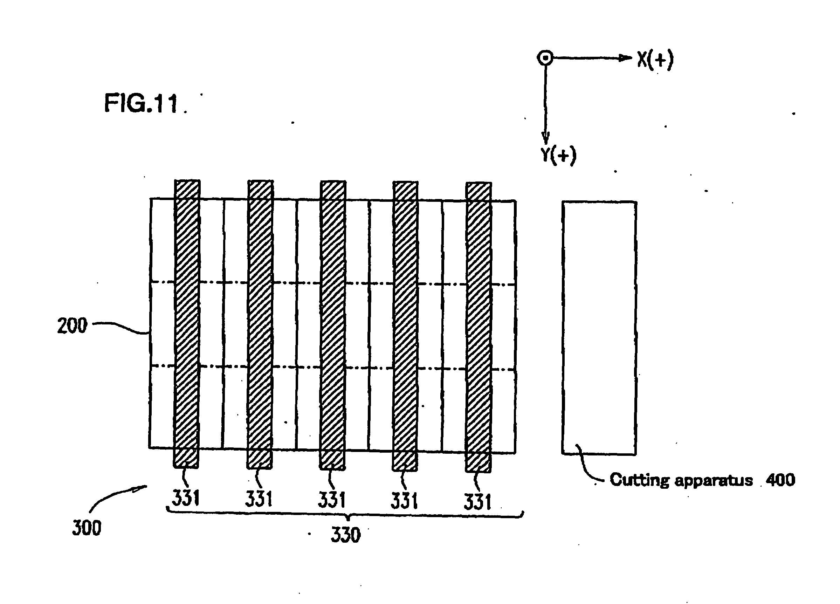

Next, an operation of the substrate cutting system having such a structure will be described. Figure 11 illustrates the mother bonded substrate 200 carried by the substrate carrying apparatus 300. The mother bonded substrate 200 is out into five pieces along the Y axis direction which is perpendicular to the carrying direction of the mother bonded substrate 200, and then cut into three pieces along the X axis direction parallel to the carrying direction of the mother bonded substrate 200 to form fifteen panel substrates.

The tables 331 of the table portion 330 are arranged such that they are close to each other. In such a state, a substrate transfer apparatus (not shown) formed of, for example, an arm-type robot places the mother bonded substrate 200 on the tables 331 close to each other.

The substrate transfer apparatus transfers the mother bonded substrate 200 with the lower surface of the mother bonded substrate 200 in a horizontal position supported by a pair of arms, for example. In such a case, the substrate support pins 360 provided on the tables 331 of the table portion 330 are raised. The substrate transfer apparatus carries the mother bonded substrate 200 to the position above the tables 331 close to each other, and moves the mother bonded substrate 200 downward. Thus, the mother bonded substrate 200 is supported by the substrate support pins 360 of the five tables 331. In such a state, arms of the substrate transfer apparatus are pulled out from the gaps between the mother bonded substrate 200 and upper surfaces of the tables 331. Then, the substrate support pins 360 are moved down, and the mother bonded substrate 200 is placed on the upper surfaces of the tables 331.

Thereafter, the suction control section 345 sucks from the suction holes 370 provided on all of the upper surfaces of the tables 331 at a negative pressure state. Thus, the mother bonded substrate 200 is adsorbed onto the upper surfaces of all of the tables 331.

In such a state, the five tables 331 are moved in parallel to the cutting apparatus 400 at speeds equal to each other, being controlled by the controller 386. The five tables 331 move together in parallel along the rail portions 310. In this case, the mother bonded substrate 200 on the five tables 331 are adsorbed to the upper surface of the tables 331, and is carried to the alignment mark imaging position on the cutting apparatus 400 side together with the five tables 331 which are integrally moving.

When the mother bonded substrate 200 is carried to the alignment mark imaging position, the first camera 435 and the second camera 436 respectively image the different alignment marks previously provided on the mother bonded substrate 200. The relative positional relationship of the mother bonded substrate 200 and the cutting apparatus 400 is calculated.

Then, based on cutting pattern data of the mother bonded substrate 200, the table portion 330 is controlled such that a line to be scribed on the mother bonded substrate 200 is located between the table 331 which is positioned on a downstream side of the carrying direction of the mother bonded substrate 200 (+X direction), and the table 331 adjacent to the above table 331. In such a state, the cutting units 411 of the first cutting device 410 and the second cutting device 430 in the cutting apparatus 400 are located between the two tables 331. As shown in Figure 7, the cutter wheels 412 of the cutting units 411 are pressed and rolled on the predetermined lines to be scribed on the upper and lower surfaces of the upper and lower mother glass substrates 210 in the mother bonded substrate 200. During this step, the break rollers 416 of the first cutting device 410 and the second cutting device 430 are moved to retraction positions so as not to be in contact with the mother glass substrates 210 which they are facing. The back up roller 414 of the first cutting device 410 opposes the cutter wheel 412 of the second cutting device 430 and the back up roller 414 of the second cutting device 430 opposes the cutter wheel 412 of the first cutting device 410 to press the mother glass substrates 210. Thus, the mother bonded substrate 200 is held such that the cutter wheels 412 can perform scribing stably.

In such a state, the first cutting device 410 and the second cutting device 430 are together moved in the Y direction. Further, the table portion 330 of the substrate carrying apparatus 300 is moved in the X direction, and the cutter wheels 412 are moved along the lines to be scribed on the mother bonded substrate 200. On the mother glass substrates 210 of the mother bonded substrate 200, scribing lines are formed along the Y direction. In this case, the cutter wheels 412 forms vertical cracks which extend approximately the entire length in the thickness direction in the mother glass substrates 210.

When the vertical cracks are formed in the mother glass substrates 210 in such a way, the cutter wheels 412 are respectively moved upward or downward to retraction positions. Then, the break rollers 416 and the back up rollers 414 are pressed to the respective mother glass substrates 210 with predetermined pressures in a manner that the break roller 416 of the first cutting device 410 opposes the back up roller 414 of the second cutting device 430 and the break roller 416 of the second cutting device 430 opposes the back up roller 414 of the first cutting device 410. Then, the first device 410 or the second device 430 is moved in the Y direction.

In such a state, the first cutting device 410 and the second cutting device 430 are moved together in the direction (-Y direction) opposite to the moving direction of the cutter wheels 412 (Y direction). Also, the table portion 330 of the substrate carrying apparatus 300 is moved in the direction opposite to the moving direction when scribing is performed by the cutter wheels 412, and the break rollers 416 and the back up rollers 414 are moved along the scribing lines formed on the mother glass substrates 210. The break rollers 416 press the surface portions of the mother glass substrates 210 on sides of the scribing lines which has been already formed with the scribing lines being located between the portions to be pressed, and pushes the substrates toward the outside. Thus, the vertical cracks extend in the thickness direction of the mother glass substrates 210 and the mother glass substrates 210 are cut along the scribing lines. In this way, the mother bonded substrate 200 formed of two mother glass substrates 210 is cut. In this case, a surface facing the surface portions of the mother bonded substrate 200 to which the break rollers 414 are pressed by the back up rollers 414. Thus, it is possible to ensure that the break rollers 416 cut the mother bonded substrate 200 along the vertical cracks formed in the mother glass substrates 210.

When the mother bonded substrate 200 is cut in this way, the out bonded substrate which has been cut is placed on one of the tables 331 which locates downstream in the carrying direction. Then, only the table 331 on which the out bonded substrate is placed is moved in the X direction.

Thereafter, four tables 331 on which the portion of the mother bonded substrate 200 other than the cut bonded substrate are moved together, and carried such that the next line to be cut on the mother bonded substrate 200 is set at the cutting apparatus 400.

When the mother bonded substrate 200 is carried such that the next line to be out in the portion of the mother bonded substrate 200 is set at the cutting apparatus 400, the table portion 330 is controlled such that the next line to be out in the portion of the mother bonded substrate 200 (line to be scribed) is located between the table 331 which located downstream in the carrying direction and the table 331 adjacent to the above table 331. Then the cutting apparatus 400 cuts using linear interpolation as described above. Thereafter, the cut bonded substrate which has been cut is placed on one table 331 which is located downstream in the carrying direction, and only the table 331 on which the cut bonded substrate is placed is carried in the X direction.

By repeating such an operation, the cut bonded substrates are respectively placed on each table 331.

As described above, the lines to be cut on the mother bonded substrate 200 held by the substrate carrying apparatus 300 are sequentially positioned with respect to the cutting apparatus 400, the mother bonded substrate 200 is sequentially cut along the lines to be cut on the mother bonded substrate 200.

Further, the substrate carrying apparatus 300 includes a plurality of tables 331 which are independently movable. Before the mother bonded substrate 200 is cut, the number of tables 331 to be moved is selected in accordance with the cutting pattern of the mother bonded substrate 200, and the intervals of the tables are adjusted and set such that the second cutting device 430 can move along the lines to be cut of the mother bonded substrate 200. The mother bonded substrate 200 is held on the selected tables.

After the bonded mother glass substrate is out, the tables 331 holding the cut bonded substrates sequentially move to material removing positions for the cut bonded substrates.

Since the cut bonded substrates which have been cut are respectively placed on the tables 331, the cutting operation of the remaining portion of the mother bonded substrate 200 can be performed while the cut bonded substrate is carried by the table 331. This significantly improves the operating efficiency for cutting the mother bonded substrate.

The first camera 435 and the second camera 436 are moved from the predetermined standby positions and image the different alignment marks previously provided on the mother bonded substrate 200 carried to the alignment position by the substrate carrying apparatus 300. In the example presented in the above description, the process of previously setting the center positions of the alignment marks when the first camera 435 and the second camera 436 capture the alignment marks as reference positions; calculating amounts of gaps in the X axis and Y axis directions between the center positions of the alignment marks captured by the first camera 435 and the second camera 436 when the mother bonded substrate 200 is actually carried; and the above-described reference positions by the image processing apparatus which is not shown; and calculating the shift of the mother bonded substrate 200 with respect to the moving direction of the first cutting device 410 and the second cutting device 430 (Y direction) and the scribing start position and the scribing end position which are end surfaces of the substrate based on the calculated result, is first performed only once when the mother bonded substrate 200 is carried to the alignment mark imaging position in the direction toward the cutting apparatus 400 in view of processing tact time for the substrate and the like. However, when the precision in dimension of the panel substrates as the final products is required, such a process is performed for a plurality of times every time the lines to be cut on the mother bonded substrate 200 is moved to the positions to be set at the cutting apparatus.

The cut bonded substrates carried by the tables 331 may be, for example, rotated by 90° in the horizontal direction, placed on the table portion 330 again, and carried to the cutting apparatus 400 so as to enable to be cut into three equal pieces. In this way, panel substrates having a predetermined size can be produced.

The mother bonded substrate 200 is not limited to the structure to be cut into five cut bonded substrates. It may be cut in accordance with the size of the panel substrates to be produced.

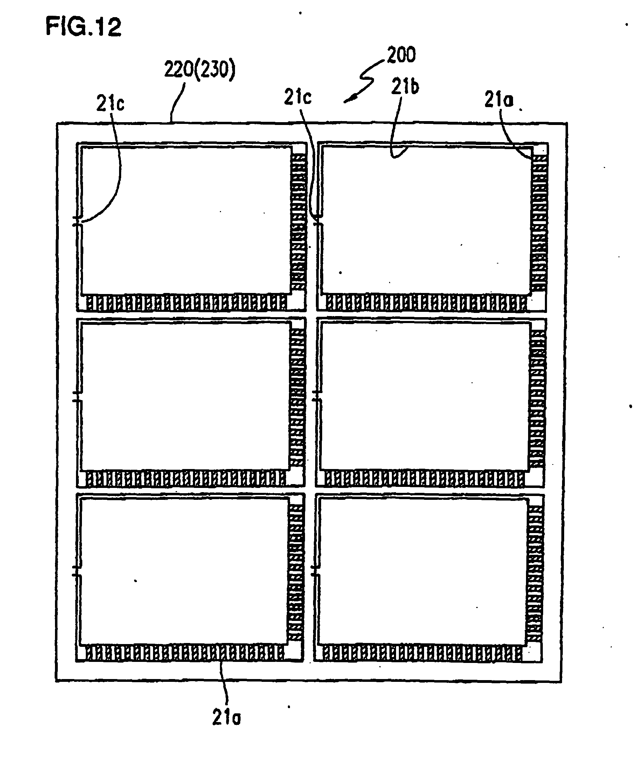

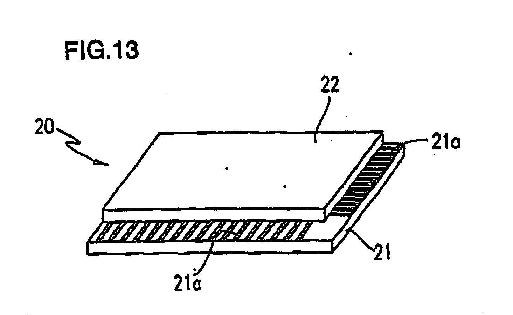

Figure 12 is a detailed plan view showing an example of the mother bonded substrate 200 to be cut into the panel substrates (display panels) of the liquid crystal display apparatuses; Figure 13 is a perspective view of a panel substrate (display panel) cut from the mother bonded substrate 200; and Figure 13 illustrates sealing portions of the mother bonded substrate 200. In this case, the mother bonded substrate 200 is divided into six panel substrates (display panels) 20 of three rows and two columns.

The mother bonded substrate 200 shown in Figure 11 is merely an example. The mother bonded substrate 200 may be divided into twelve panel substrates of four rows and three columns, for example. The cutting pattern and the number of times to be out of the mother bonded substrate 200 vary.

As shown in Figure 13, the panel substrate 20 is formed by bonding a TFT substrate 21, on which a thin film transistor (TFT) is provided, and a CP substrate 22, on which a color filter has a smaller area than the TFT substrate 21. A liquid crystal is injected and enclosed between the TFT substrate 21 and the CF substrate 22 to form a liquid crystal display panel. Terminal portions 21a are provided on a pair of side edges of the TFT substrate 21 which are perpendicular to each other. The CF substrate 22 is bonded to the TFT substrate 21 such that the terminal portions 21a of the TFT substrate 21 are exposed.

As shown in Figure 12, the mother bonded substrate 200 is formed by boding a mother TFT substrate 220 and a mother CF substrate 230 having a similar size as the mother TFT substrate 220. On the mother TFT substrate 220, terminal portions 21a are formed at the positions which respectively correspond to six TFT substrates 21. Further, the TFT substrates 21 are respectively bonded to the mother TFT substrate 220 with sealing members 21b provided so as to correspond to the peripheral portions of six CF substrates 22. Injection openings 21c for injecting liquid crystal to the panel substrates 20 are provided in portions of the sealing members 21b provided in correspondence with the CF substrates 22.

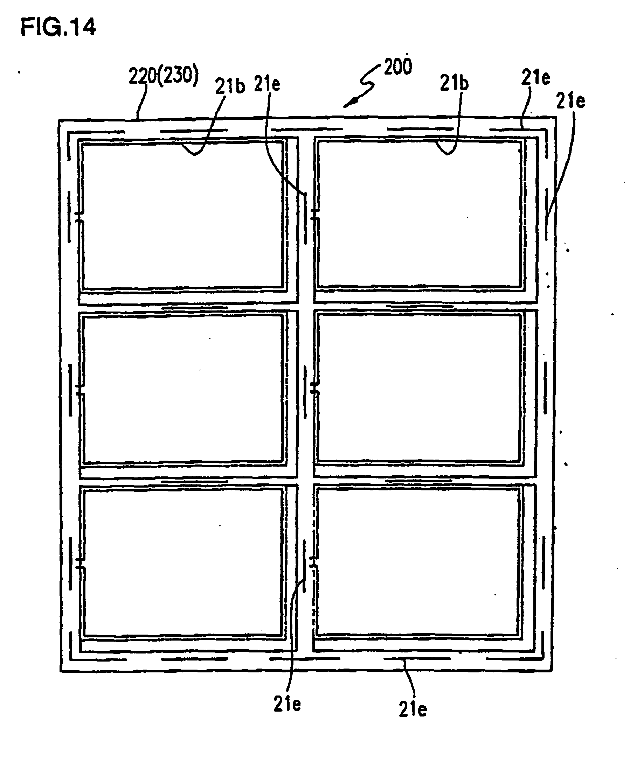

Furthermore, as shown in Figure 14, adhesive sealing members 21e for attaching the mother substrates 210 to each other are intermittently provided along the outer periphery on the mother bonded substrate 200. The adhesive sealing members 21e are also provided in the corresponding regions between two TFT substrates 21 adjacent to each other.

Such a mother bonded substrate 200 can also be cut by the substrate cutting system according to the present invention. A cutting method in such a case will be described with reference to Figure 14. The basic operations of the substrate cutting system in such a case are as described above.

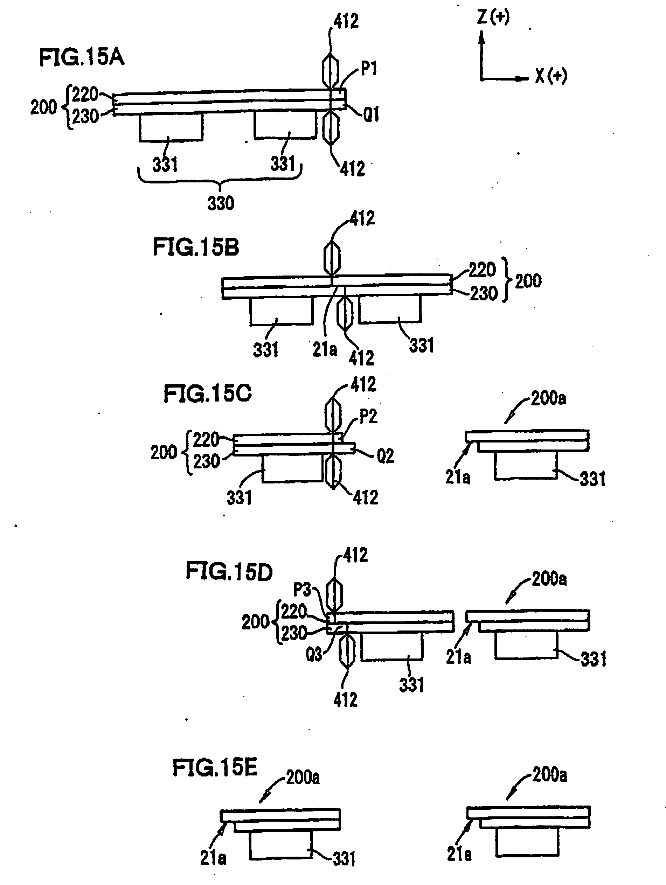

As shown in Figure 15A, the mother bonded substrate 200 is placed on the table portion 330 of the substrate carrying system and is carried to the position where the lines to be cut on the mother bonded substrate 200 is positioned by the cutting apparatus 400. In this example, the mother TFT substrate 220 is located at the upper side and the mother CF substrate 230 is located at the lower side in the mother bonded substrate 200 positioned by the cutting apparatus 400.

On the mother bonded substrate 200 positioned by the cutting apparatus 400, the cutter wheels 412 of the cutting units 411 of the first cutting device 410 and the second cutting device 430 respectively form scribing lines for cutting unnecessary parts P1 and Q1 of the mother TFT substrate 220 and the mother CF substrate 230 on the +X direction side (downstream side in the carrying direction of the mother glass substrate 200). Then, the mother bonded substrate 200 is cut by the break rollers 416 along the scribing lines. In this way, unnecessary parts P1 and Q1 in the side peripheral portions of the mother TFT substrate 220 and the mother CF substrate 230 are fallen and removed.

Next, as shown in Figure 15B, the tables 331 on which the mother bonded substrate 200 is placed are moved in the +X direction. The first cutting device 410 and the second cutting device 430 are placed on the -X direction side (upstream side in the carrying direction of the mother bonded substrate 200) of the table 331 which is located on the +X direction side (downstream side in the carrying direction of the mother bonded substrate 200). In this case, the cutter wheel 412 of the second cutting device 430 is located on the +X direction side (downstream side in the carrying direction of the mother bonded substrate 200) with respect to the cutter wheel 412 of the first cutting device 410.

In such a state, the cutter wheels 412 of the cutting units 411 of the first cutting device 410 and the second cutting device 430 form scribing lines on the mother TFT substrate 220 and the mother CF substrate 230 along predetermined lines to be scribed. Then, the mother TFT substrate 220 and the mother CF substrate 230 are cut by the break rollers 416 along the scribing lines.

In this way, the out substrate 200a which has been cut is placed on the table 331 which is located on the +X direction side (downstream side in the carrying direction of the mother bonded substrate 200) with the terminal portion 21a on the mother TPT substrate 220 being exposed.

Then, as shown in Figure 15C, the table 331 on which the cut substrate 200a is moved in the +X direction. The table portion 330 on which the cut mother bonded substrate 200 is placed is moved in the X direction, and the lines to be cut for cutting unnecessary parts P2 and Q2 are located at the positions corresponding to the first cutting device 410 and the second cutting device 430. The mother TFT substrate 220 and the mother CF substrate 230 are scribed and cut. Thus, the unnecessary parts P2 and Q2 are removed by a free fall.

By repeating similar operations thereafter, the mother bonded substrate 200 is cut into the cut substrates 200a with the terminal portions 21a on the side edges being exposed. The cut substrates 200a which has been cut are respectively placed on one table 331.

For removing unnecessary parts P3 and Q3 on the side edges of the -X direction side (upstream side in the carrying direction) of the mother bonded substrate 200, the table portion 330 is moved such that the lines to be cut for cutting the unnecessary parts P3 and Q3 of the mother bonded substrate 200 from which the cut substrate 200a has been out is located at the positions corresponding to the first cutting device 410 and the second cutting device 430 as shown in Figure 15D. In this case, the cutter wheel 412 of the second cutting device 430 is also located on the +X direction side (downstream side in the carrying direction of the mother bonded substrate 200) with respect to the cutter wheel 412 of the first cutting device 410 such that the terminal portion 21a provided on the side edge portion of the TFT substrate 220 on the upper side is exposed.

In such a state, the cutter wheels 412 of the cutting units 411 of the first cutting device 410 and the second cutting device 430 form scribing lines on the mother TFT substrate 220 and the mother CP substrate 230 along the predetermined lines to be scribed. Then the mother TFT substrate 220 and the mother CF substrate 230 are cut by the break rollers 416 along the scribing lines.

In this way, the unnecessary parts P3 and Q3 are removed by a free fall. As shown in Figure 15B a cut substrate 200a which has been cut is placed on the table 331 with the terminal portion 21a on the mother TFT substrate 220 being exposed.

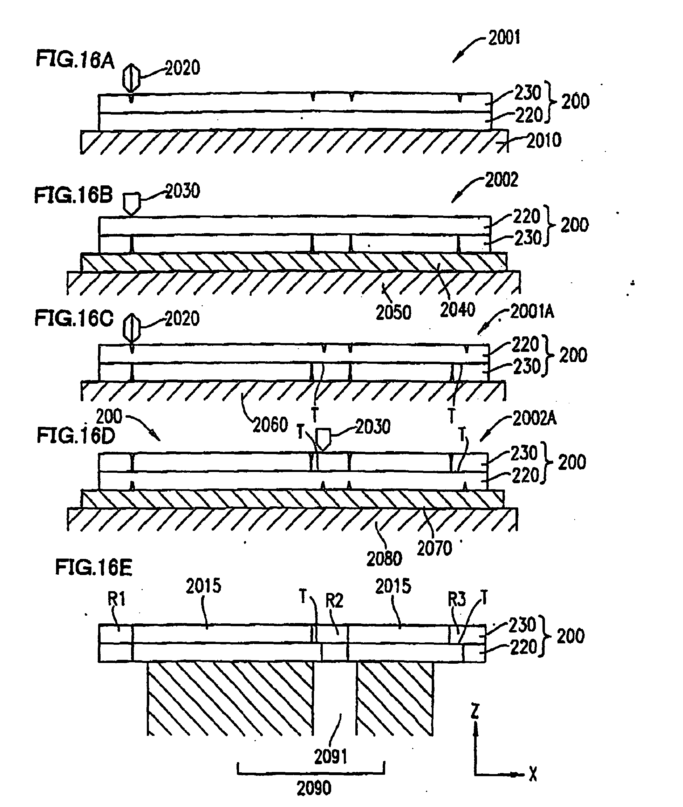

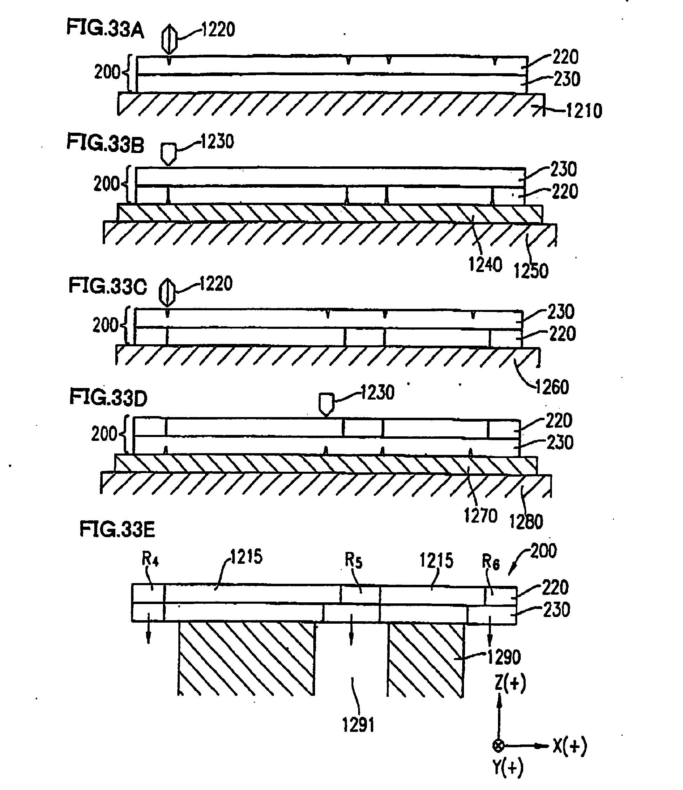

For comparison, a substrate cutting method when the mother bonded substrate 200 is cut by the conventional substrate cutting system shown in Figure 33 will be described with reference to Figures 16 and 35.

As shown in Figure 16A, the mother bonded substrate 200 is placed on the table 2010 of the first scribing apparatus 2001 with the mother CF substrate 230 being on the upper side and the mother TFT substrate 220 being on the lower side. The mother CF substrate 230 is scribed by the cutter wheel 2020.

In Figure 16B, the mother bonded substrate 200 is reversed upside down. The mother bonded substrate 200 on which the scribing process to the mother CF substrate 230 is completed by the first scribing apparatus is reversed such that the mother TFT substrate 220 is on the upper side and the mother CF substrate 230 is on the lower side, and is placed on a mat 2040 provided on a table 2050 of the first breaking apparatus 2002. The breaking bar 2030 presses the mother TFT substrate 220 at the portions opposing the scribing lines. Thus, the mother CF substrate 230 is cut along the scribing lines.

In Figure 16C, the mother bonded substrate 200 is placed on a table 2060 of the second scribing apparatus 2001A with the mother TFT substrate 220 being on the upper side and the mother CF substrate 230 being on the lower side. The cutter wheel 2020 scribes the mother TFT substrate 220. In this case, the scribing lines formed on the mother TFT substrate 220 are shifted with respect to the scribing lines formed on the mother CF substrate 230 so as to expose terminal portions T.

In Figure 16D, the mother bonded substrate 200 is reversed upside down again. Thus, the mother bonded substrate 200 is placed on a mat 2070 provided on a table 2080 of the second breaking apparatus 2002A with the mother CF substrate 230 being on the upper side and mother TFT substrate 220 being on lower side. In such a state, the breaking bar 2030 presses the mother CF substrate 230 at the portions opposing the scribing lines. Thus, the mother TFT substrate 220 is cut along the scribing lines.

In this way, two cut substrates 2015 are produced. In this case, unnecessary portions R1 through R3 are formed in the side edge portions and central portion of the mother bonded substrate 200. The unnecessary portions R2 and R3 are formed to have uneven surfaces so as to expose the terminal portions of the mother TFT substrate 220. The portions having larger areas are located on the upper side.

In this case, as shown in Figure 16D, a portion to be an unnecessary part R2 of the mother CF substrate 230 which has been already cut is pressed by the breaking portion 2030. Thus, a small chip may undesirably be generated in the terminal portions T of the out substrates 2015 which may be required after cutting.

Then, as shown in Figure 16E, the entire mother bonded substrate 200 is placed on a table 2090 including an opening 2091 by an absorption pad (not shown). However, the unnecessary part R2 cannot be dropped by a free fall. The unnecessary part R3 can free-fall, but the unnecessary part R3 may cause a small chip in the terminal portion.

Alternatively, the unnecessary parts R2 and R3 have to be removed by using an apparatus in Figure 16E.

In the substrate cutting system according to the present invention, the mother bonded substrate 200 is sequentially cut from the edge in the carrying direction of the mother bonded substrate 200, the out substrate 200a is placed on the table 331 after cutting and the table 331 moves so as to separate the cut substrate 200a from the mother bonded substrate 200. Thus, the generation of a small chip in the terminal portions of the cut substrate due to cutting unnecessary parts can be eliminated.

The first cutting device 410 and the second cutting device 430 are arranged so as to oppose each other in the vertical direction. However, the first cutting device 410 and the second cutting device 430 are not limited to such a structure.

For example, the first cutting device 410 and the second cutting device 430 respectively includes moving means such that the cutting units 411 thereof are arranged with being shifted in the X direction. As described above, such an example can be preferably used when the cutting positions of the mother TFT substrate 220 and the mother CF substrate 230 are shifted. Further, the first cutting device 410 and the second cutting device 430 may be movable in the X direction with respect to each other.

The display panels are not limited to liquid crystal display panels, but may be flat panel displays such as plasma display panels, organic EL display panels, and the like.

Figure 10 is a partial perspective view showing a supporting section 1475 of the cutting apparatus 400. In order to clearly show that the supporting section 1475 is operated when the first cutting device 410 and the second cutting device 430 are moved in the Y direction, the mother bonded substrate 200 is indicated by a broken line.

The supporting section 1475 includes: a first roller 1471; a second roller 1472; a third roller 1473; and a belt 1474 passing through the first roller 1471, the second roller 1472, and the third roller 1473. The belt 1474 is preferably made of steel.

When the surface of the mother bonded substrate 200 is scribed and broken by using the first cutting device 410 and the second cutting device 430, cullet powder is generated. The cutting apparatus 400 further includes an air section 1490 for blowing compressed air to the cullet powder generated during scribing and breaking and piled up on the belt 1474 for cleaning.

A belt 1474A between the second roller 1472 and the third roller 1473 is located so as to be in contact with the lower mother glass substrate 210. In this way, the belt 1474A supports the mother bonded substrate 200. Thus, when the mother bonded substrate 200 is cut, a part of the mother bonded substrate 200 can be prevented from falling, or unnecessary cracks generated in an uncontrollable direction from portions where the scribing lines to be used for cutting are formed can be prevented. Therefore, the cutting apparatus 400 can cut the upper mother glass substrate 210 and the lower mother glass substrate 210 stably along the scribing lines.

When the first cutting device 410 and the second cutting device 430 of the cutting apparatus 400 are moved along the Y axis direction, the third roller 1473 is secured while the first roller 1471 and the second roller 1472 moves along the Y axis direction with the second cutting device 430. In other words, the first roller 1471 and the second roller 1472 are integrally provided with the second cutting device 430.

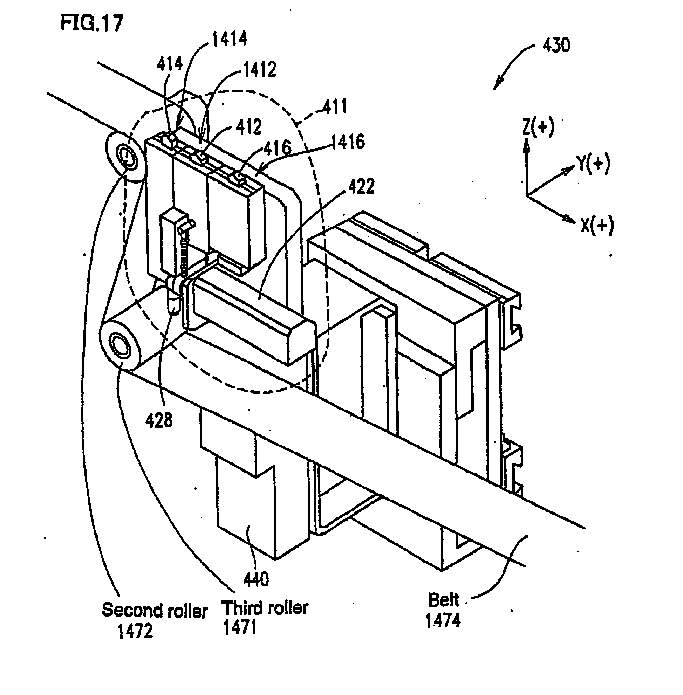

Figure 17 is a perspective view showing the structure of second cutting device 430 and the supporting section 1475 in detail.

By operating (driving) the ascending/descending mechanism the cutting units 411 moves so as to come closer to or move away from the lower mother glass substrate 210.

By operating (driving) the servo motor 422 of the scribing portion 1412, the cutter wheel 412 which is a scribing means moves so as to come closer to or move away from the lower mother glass substrate 210.

Further, by adjusting the roller position adjustment portion 428 of the back up portion 1414, it is possible to move the position where the back up roller 414, which is a back up means, and the lower mother glass substrate 210 to be in contact with each other.

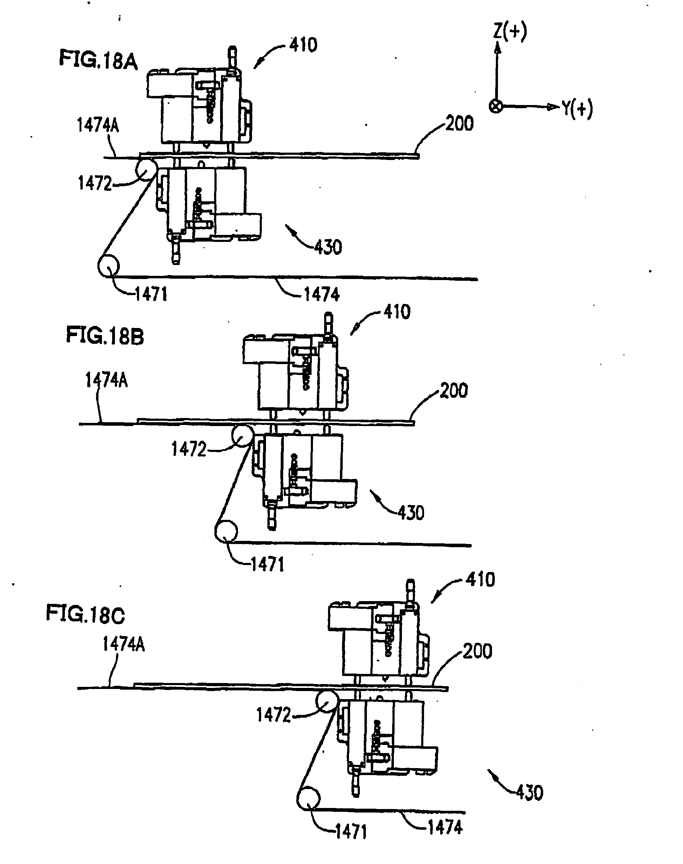

Figure 18 is a side view showing a process of the first cutting device 410 and the second cutting device 430 scribing both surfaces of the mother bonded substrate 200.

Figure 18A shows the first cutting device 410 and the second cutting device 430 breaking (cutting) the mother bonded substrate 200 at the predetermined positions. Specifically, the first cutting device 410 and the second cutting device 430 cut the mother bonded substrate 200 along the Y axis direction perpendicular to the X axis direction and the Y axis direction.

Figure 18B shows the first cutting device 410 and the second cutting device 430 breaking (cutting) the mother bonded substrate 200 at the positions further moved along the Y axis direction. In this step, the first roller 1471 and the second roller 1472 are moved together with the second cutting device 430, and the mother bonded substrate 200 which has already been cut is supported by the belt 1474.

Figure 18C shows the first cutting device 410 and the second cutting device 430 further moved along the Y axis direction and cutting the mother bonded substrate 200 at the positions.

Since the portions which has been cut by the first cutting device 410 and the second cutting device 430 of the cutting apparatus 400 is supported by the supporting section 1475, it is possible to ensure that the cutting apparatus 400 cut the mother bonded substrate 200 without being affected by the substrate which has already been cut.

Thereafter, the first cutting device 410 retracts the back up roller 414 of the first back up portion 1414 and the break roller 416 of the first breaking portion 1416 from the upper mother glass substrate 210. The second cutting device 430 retracts the back up roller 414 of the second back up portion 1414 and the break roller 416 of the second breaking portion 1416 from the lower mother glass substrate 210. The first cutting device 410 and the second cutting device 430 of the cutting apparatus 400 return to the standby positions. While the cutting apparatus 400 returns to the standby position, the unnecessary parts cut from the mother bonded substrate 200 fall into a cullet box provided below the cutting apparatus 400.

In the above description, the scribing portions 1412 of the first cutting device 410 and the second cutting device 430 are formed to have the cutter wheels 412 as scribing means. However, the scribing portions 1412 may be formed by using other scribing means which can scribe the mother bonded substrate 200.

For example, scribing portions 1412 may be formed to have scribing means which irradiate the mother bonded substrate 200 with laser light and generates strains in the two mother glass substrates 210 forming the mother bonded substrate 200 due to heat stress for scribing. In the scribing method utilizing heat strains generated in the mother glass substrates 210, it is preferable that the scribing portions 1412 further include cooling means for cooling the portions near the laser spot formed in the mother glass substrates 210 by the laser light.

In the above description, the breaking portions 1416 of the first cutting device 410 and the second cutting device 430 include the break rollers 416 as breaking means. However, the breaking portions 1416 may include other breaking means as long as the mother glass substrates 210 can be broken (cut) along the scribing lines after the scribing lines have been already formed in the mother bonded substrate 200 by the scribing means.

For example, the breaking portion 1416 may include breaking means for irradiating the mother glass substrate 210 with laser light along the scribing lines formed on the mother glass substrate 210 by the scribing mean and extending vertical cracks immediately below the scribing lines in the thickness direction of the mother glass substrate to cut the mother glass substrate 210. Alternatively, the breaking portion 1416 may include breaking means which blows a heated fluid such as steam or hot water (for example, 60°C or higher) along scribing lines which have been already formed in the mother glass substrates and causes cubical expansion of the surfaces of the mother glass substrates 210 to extend vertical cracks and out the mother glass substrates 210.

In the above description, the back up portions 1414 of the first cutting device 410 and the second cutting device 430 include the back up rollers 414 as substrate supporting means. However, the back up portion 1414 may be formed using other substrate supporting means which can support the mother bonded substrate 200.

For example, the back up portion 1414 may include means for supporting the mother bonded substrate by blowing compressed air from nozzles to the mother bonded substrate 200.

Further, the first cutting device 410 and the second cutting device 430 may not include the breaking portions 1416.

For example, the cutter wheels 412 may be included in the scribing portions as scribing means and two scribing lines may be formed in parallel with about 0.5 to 2 mm intervals on each of the two mother glass substrates 210 forming the mother bonded substrate 200. Thus, cutting can be performed along the scribing lines formed first among the two scribing lines. This cutting method utilizes the fact that internal stress is applied near the surface of the scribing lines first formed in the mother glass substrates 210 when the second scribing line is formed. In this way, the mother glass substrates 210 can be out by only scribing the cutter wheels 412 which are scribing means of the scribing portions 1412. Thus, the breaking portions can be omitted.

### <Embodiment 2>

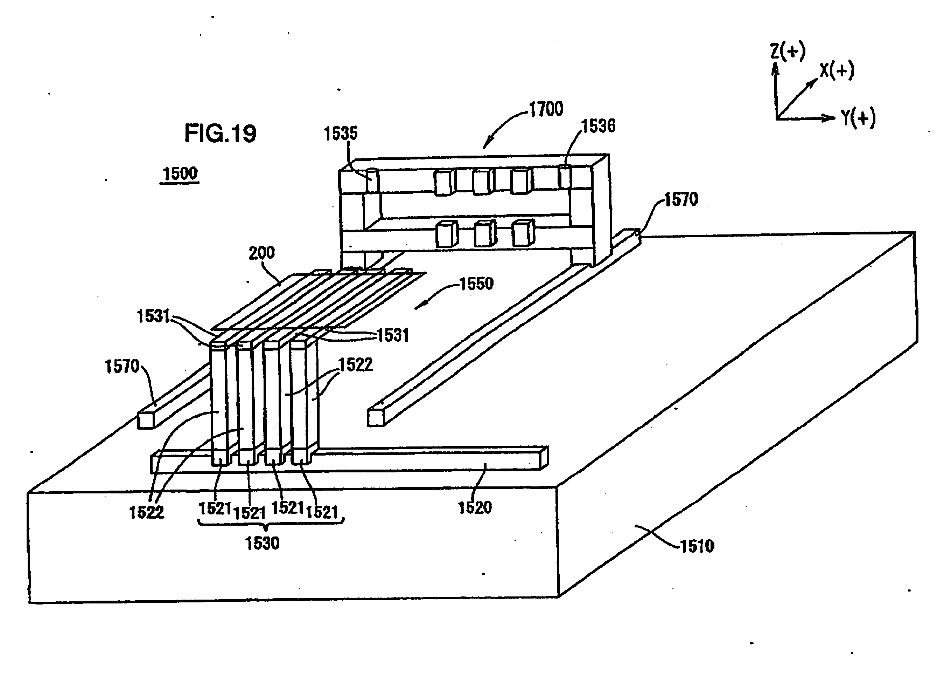

Figure 19 is a perspective view showing an example of another embodiment of the substrate cutting system according to the present invention. The substrate cutting system 1500 shown in Figure 19 includes: a substrate carrying apparatus 1550 for carrying the mother bonded substrate 200 in a horizontal manner along a predetermined direction (Y direction); and a cutting apparatus 1700 for cutting the mother bonded substrate 200 placed on the substrate carrying apparatus 1550 in a predetermined direction (X direction). The substrate carrying apparatus 1550 and the cutting apparatus 1700 are provided on a mount 1510.

The substrate carrying apparatus 1550 used in the substrate cutting system 1500 includes, for example, a table portion 1530 formed of four tables 1531. The tables 1531 have similar structures to each other and are joined to supporting posts 1522 and held by respective moving bodies 1521 of a guide 1520.

The moving bodies 1521 are individually movable in the Y direction using, for example, a linear motor.

On an upper surface of each of the tables 1531, a number of suction holes 370 for sucking the substrate when the mother bonded substrate 200 is placed are provided similarly to Embodiment 1. The suction holes provided on the table 1531 are connected to a suction control section (not shown) collectively for every table 1531. The suction control section is formed such that it can suck all the suction holes 370 provided on one table 1531 to a negative-pressure state for every table. Similarly to Embodiment 1, on the table 1531, the mother bonded substrate 200 supported by the substrate support pins (not shown) is brought in contact with an upper surface of the table 1531 by moving the substrate support pins downward. In such a state, by collectively putting all the suction holes to the negative-pressure state by the suction control section, the mother bonded substrate 200 is adsorbed to the table 1531.

The cutting apparatus 1700 includes a first camera 1535 for imaging an alignment mark previously provided on the mother bonded substrate 200 placed on the tables 1531 of the substrate carrying apparatus 1530 and the second camera 1536 for imaging an alignment mark different from the alignment mark imaged by the first camera 1535 are provided so as to be movable in the Y direction.

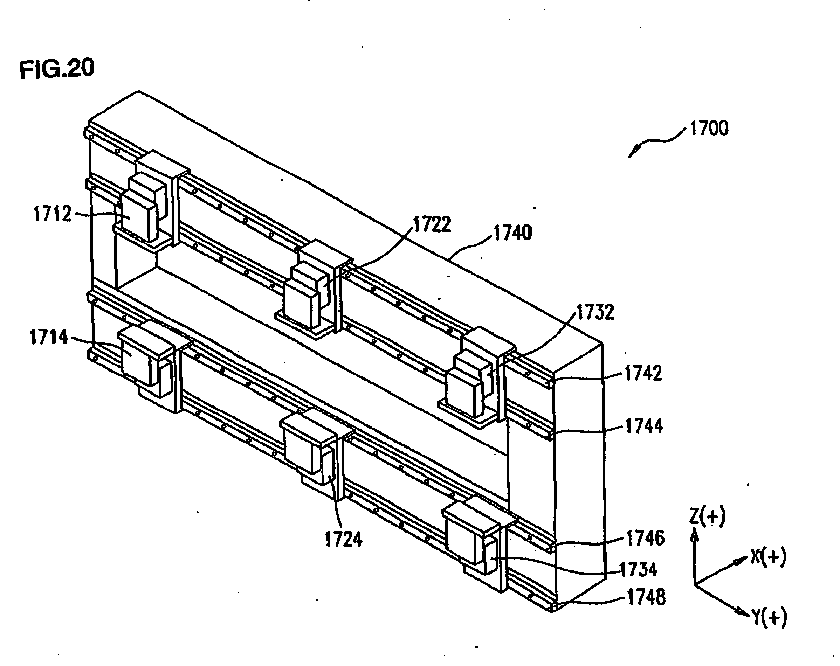

Figure 20 is a perspective view showing the cutting apparatus 1700 of the substrate cutting system 1500 according to Embodiment 2 of the present invention. The cutting apparatus 1700 includes, for example, a first cutting device 1712, a second cutting device 1714, a third cutting device 1722, a fourth cutting device 1724, a fifth cutting device 1732, and a sixth cutting device 1734 as shown in Figure 20. The first cutting device 1712 and the second cutting device 1714 are arranged so as to oppose each other. The third cutting device 1722 and the fourth cutting device 1724 are arranged so as to oppose each other. The fifth cutting device 1732 and the sixth cutting device 1734 are arranged so as to oppose each other.

The first cutting device 1712, the second cutting device 1714, the third cutting device 1722, the fourth cutting device 1724, the fifth cutting device 1732, and the sixth cutting device 1734 have the same structure to each other, and, for example, is same as those of the first cutting device and the second cutting device of Embodiment 1.

However, the scribing portion, the back up portion, and the breaking portion are arranged in line along the X direction in each of the first cutting device 1712, the second cutting device 1714, the third cutting device 1722, the fourth cutting device 1724, the fifth cutting device 1732, and the sixth cutting device 1734.

Each of the first cutting device 1712, the second cutting device 1714, the third cutting device 1722, the fourth cutting device 1724, the fifth cutting device 1732, and the sixth cutting device 1734 is individually movable along the Y direction.

The cutting apparatus 1700 includes a rectangular parallelepiped-shape securing table 1740 which is hollow inside. The securing table 1740 includes a first rail 1742 and a second rail 1744 provided in parallel to each other. The first cutting device 1712, the third cutting device 1722, and the fifth cutting device 1732 are attached to the securing table 1740 such that they have flexibility in spaces therebetween and are individually movable.

Further, the securing table 1740 includes a third rail 1746 and the fourth rail 1748 provided in parallel to each other. The second cutting device 1714, the fourth cutting device 1724, and the sixth cutting device 1734 are attached to the securing table 1740 such that they have flexibility in the spaces therebetween and are individually movable.

The cutting apparatus is movable along a pair of rails 1570 in the X direction which is perpendicular and horizontal to the first rail 1742, the second rail 1744, the third rail 1746, the fourth rail 1748 and the guide 1520.

Next, an operation of the substrate cutting system having such a structure will be described below. The tables 1531 of the table portion 1530 are arranged such that they are separate from each other. In such a state, a substrate transfer apparatus (not shown) formed of, for example, an arm-type robot places the mother bonded substrate 200 on the tables 331 close to each other.

The substrate transfer apparatus transfers the mother bonded substrate 200 with the lower surface of the mother bonded substrate 200 in a horizontal position supported by a pair of arms, for example. In such a case, the substrate support pins (not shown) provided on the tables 1531 of the table portion 1530 are raised. The substrate transfer apparatus carries the mother bonded substrate 200 to the position above the tables 1531 close to each other, and moves the mother bonded substrate 200 downward. Thus, the mother bonded substrate 200 is supported by the substrate support pins of the four tables 1531. In such a state, arms of the substrate transfer apparatus are pulled out from the gaps between the mother bonded substrate 200 and upper surfaces of the tables 1531. Then, the substrate support pins of the tables 1531 are moved down, and the mother bonded substrate 200 is placed on the upper surfaces of the tables 1531.

Thereafter, the suction control section sucks from the suction holes provided on all of the upper surfaces of the tables 1531 at a negative pressure state. Thus, the mother bonded substrate 200 is adsorbed onto the upper surfaces of all of the tables 1531.

In such a state, the cutting apparatus 1700 moves to the alignment mark imaging position in the -X direction along the pair of the rails 1570 by, for example, a servo motor, and the first camera 1535 and the second camera 1536 image different alignment marks provided on the mother bonded substrate 200.

The center positions of the alignment marks when the first camera 1535 and the second camera 1536 capture the alignment marks are previously set as reference positions. After the mother bonded substrate 200 is actually placed on the tables 1531 of the table portion 1530, the cutting apparatus 1700 moves to the alignment mark imaging position to calculate amounts of gaps between the center positions of the alignment marks respectively captured by the first camera 1535 and the second camera 1536 and the above-described reference positions in the X axis and Y axis directions by using an image processing apparatus, which is not shown. Based on the result of the calculation, tilt of the mother bonded substrate 200 in the Y direction with respect to the moving direction of the first cutting device 1712 through the sixth cutting device 1734 (X direction) and the scribing start position and the scribing end position which are end surfaces of the mother bonded substrate 200 are calculated.

With the movement of the first cutting device 1712 through the sixth cutting device 1734 in the Y direction and the movement of the cutting apparatus 1700 in the X direction respectively being controlled and linearly interpolated, the second cutting device 1714, the fourth cutting device 1724, and the sixth cutting device 1734 are moved through the gaps between the tables. Thus, the mother bonded substrate 200 can be cut along the lines to be cut even when the mother bonded substrate 200 is not carried in the predetermined position on the table portion 1530 (i.e., the substrate is tilted to a certain degree).

### <Embodiment 3>

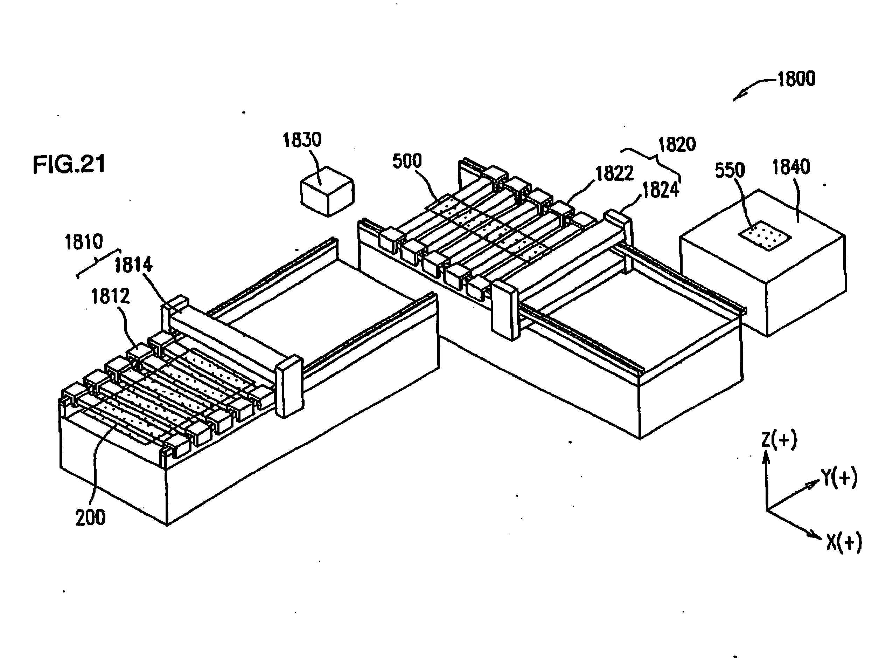

Figure 21 is a diagram showing an example of a combined embodiment of the substrate cutting system according to the present invention.

A substrate cutting system 1800 includes: a first substrate cutting system 1810 for cutting the mother bonded substrate 200 into first cut substrates 500 and carrying the mother bonded substrate 200 and the first cut substrate 500 in the Y axis direction; and a second substrate cutting system 1820 for cutting each of the first cut substrates 500 into second out substrates 550 and carrying the first cut substrates 500 and the second cut substrates 550 in the X axis direction which is perpendicular to the Y axis; a carrying apparatus 1830 for carrying the first cut substrates 500 to the second mother substrate cutting system 1820; and a measuring apparatus 1840 for checking the second out substrates.

The first substrate cutting system 1810 includes a cutting apparatus 1814 for cutting the mother bonded substrate 200 into the first cut substrates 500 and a substrate carrying apparatus 1812 for carrying the mother bonded substrate 200 and the first cut substrates 500 in the Y axis direction.

The second substrate cutting system 1820 includes a cutting apparatus for cutting the first cut substrates 500 into the second cut substrates 550 and a substrate carrying apparatus 1822 for carrying the first cut substrates 500 and the second cut substrates 550 in the X axis direction.

The carrying apparatus 1830 carries the first cut substrates 500 carried by the substrate carrying apparatus 1812 of the first substrate cutting system 1810 to the substrate carrying apparatus 1822 of the second substrate cutting system 1820 such that the longitudinal directions of the first cut substrates 500 are not changed. The carrying apparatus 1830 preferably carries the first cut substrates 500 while supporting the lower surfaces thereof, for example.

The measuring apparatus 1840 measures the dimension of the external diameter of the second out substrates 550. If the dimension of the external diameter of a second cut substrate 550 measured by the measuring apparatus 1840 is different from a predetermined reference value, the second cut substrate 550 is judged as defective and the second cut substrate 550 is removed from the present substrate cutting system.

In the conventional substrate cutting system shown in Figure 35, the scribing lines are formed on the first substrate of the mother bonded substrate 2008 in the first scribing apparatus 2001, the unstable mother bonded substrate 2008 with the scribing lines formed thereon is reversed and carried to the first breaking apparatus 2002 to cut the first substrate, the mother bonded substrate 2008 from which the first substrate is cut is carried to the second scribing apparatus 2001A to form scribing lines on the second substrate, the unstable mother bonded substrate 2008 with the scribing lines formed on the second substrate is reversed and carried to the second breaking apparatus 2002A to obtain the panel substrates. In the above-described conventional substrate cutting system, at least three carrying machines are required besides those for supplying a material and removing the material. When a plurality of panel substrates are produced from the mother bonded substrates 200 according to the present embodiment, the substrate carrying apparatus 1812 of the first substrate cutting system and the substrate carrying apparatus 1822 of the second substrate cutting system carry the substrates. Thus, the carrying apparatus 1830 which passes the substrates between the first substrate cutting system and the second substrate cutting system is only the carrying apparatus which lifts and carries the substrates under the process of cutting the mother bonded substrate 200 in the present embodiment.

Furthermore, in the conventional substrate cutting system shown in Figure 35, when the mother bonded substrate 2008 is carried from the first scribing apparatus 2001 to the first breaking apparatus 2002, the unstable mother bonded substrate 2008 with the scribing lines formed on the first substrate is reversed, and, when the mother bonded substrate 2008 is carried from the second scribing apparatus 2001A to the second breaking apparatus 2002A, the unstable mother bonded substrate 2008 is also reversed. In the substrate cutting system according to the present embodiment, however, the substrate does not have to be reversed upside down, thereby eliminating the need for a reverse apparatus for the substrates, and also the mother bonded substrate is not carried in the unstable condition with the scribing lines formed thereon. This eliminates a risk that some of the substrates in the bonded substrate fall, or the mother bonded substrate itself is damaged.

Moreover, in the conventional substrate cutting system shown in Figure 35, at all of the four apparatuses, which are, the first scribing apparatus 2001, first breaking apparatus 2002, second scribing apparatus 2001A, and the second breaking apparatus 2002A, carrying of the mother bonded substrate 2008 to the next apparatus, positioning of the mother bonded substrate 2008, and the processing standby time are required. In the substrate cutting system 1800 of the present embodiment, however, the scribing steps and the breaking steps can be sequentially performed by one apparatus, and then the substrates can be removed. This shortens the cutting process tact time for the mother bonded substrate.

In the substrate cutting system 1800 shown in Figure 21, the first substrate cutting system 1810 and the second substrate cutting system 1820 are arranged such that the direction along which the substrate carrying apparatus 1812 of the first substrate cutting system carries the mother bonded substrate 200 and the first cut substrates 500, and the direction along which the substrate carrying apparatus 1822 of the second substrate cutting system carries the first cut substrates 500 and the second out substrates 550, are substantially perpendicular. The arrangement is not limited to this, but the first substrate cutting system 1810 and the second substrate cutting system 1820 may be arranged so as to be lined in parallel.

### <Embodiment 4>

In the above description of the substrate cutting system, examples in which the mother bonded substrate is placed on the table portion which is horizontally provided for supporting the weight of the substrate and the substrate is carried by the table portion have been described. With such a structure, the weight of the entire substrate can be dispersed, and thus, the mother bonded substrate can be carried stably.

However, substrate cutting systems for cutting substrates which have such a structure need a large floor space for installation, which results in the increased cost of panel display production. Recently, it has been desired to decrease a floor space for installing the substrate cutting system.

Regarding the present embodiment, a substrate cutting system for cutting and carrying the mother bonded substrates in a position vertical or slightly tilted from the vertical in order to decrease the floor space for the substrate cutting system for cutting the mother bonded substrates will be described.

Herein, a substrate in a position vertical or slightly tilted from the vertical means a substrate in a position tilted by 5° to 10° from the vertical, i.e., tilted by 80° to 85° from the horizontal.

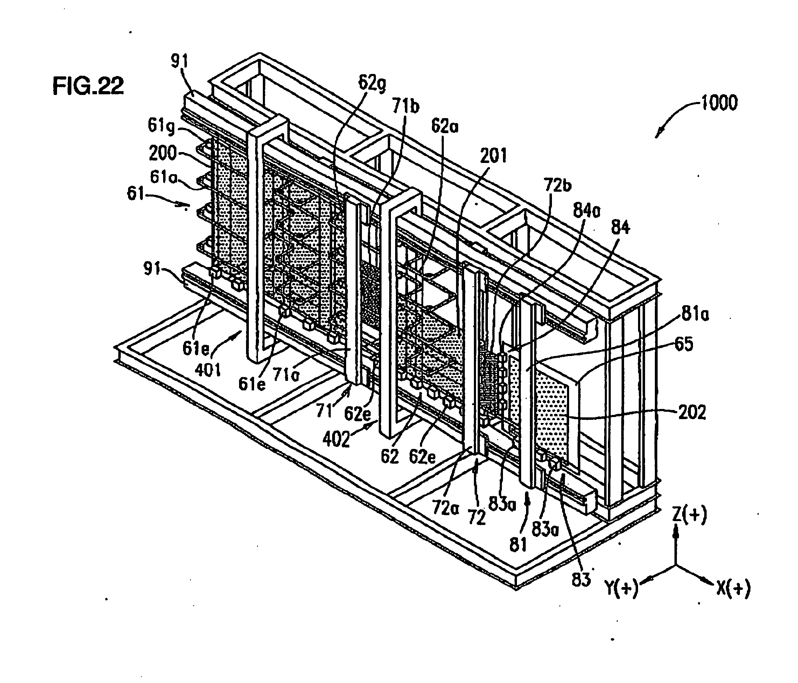

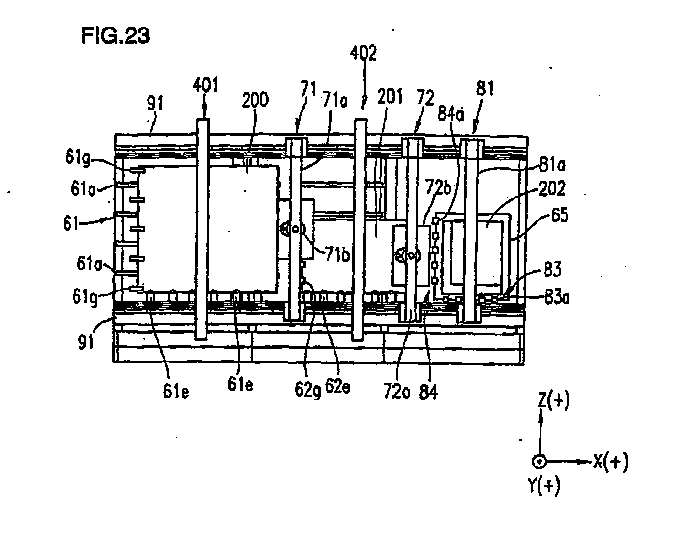

Figure 22 is a perspective view showing the substrate cutting system according to the present embodiment; and Figure 23 is a plan view thereof. The substrate cutting system includes: a first carrying mechanism 61 for carrying the mother bonded substrate 200 in the vertical position or slightly tilted from the vertical (hereinafter, the term "vertical position" include the tilted position); a first cutting apparatus 401 for cutting the mother bonded substrate 200 carried by the first carrying mechanism 61 along the vertical direction; a first rotation mechanism 71 for absorbing and rotating first cut substrates 201 out by the first cutting apparatus 401 by 90° while keeping the vertical position; a second carrying mechanism 62 for carrying the first cut substrates 201 rotated by the first rotation mechanism 71; a second cutting apparatus 402 for cutting the first cut substrates 201 carried by the second carrying mechanism along the vertical direction; a second rotation mechanism 72 for absorbing and rotating second cut substrates 202 cut by the second cutting apparatus 402 while keeping the vertical position; and a scribing apparatus 81 for further scribing the second cut substrates 202 rotated by the second rotation mechanism 72.

The first cutting apparatus 401 and the second cutting apparatus 402 have a similar structure with that of the cutting apparatus 400 used in the substrate cutting system shown in Figure 1 except for the point that the direction for cutting substrates is the vertical direction. The first cutting apparatus 401 and the second cutting apparatus 402 respectively out the mother glass substrates in the mother bonded substrate 200 along the vertical direction.

The first carrying mechanism 61 includes carrying belts 61a which rotate along the horizontal direction. The carrying belts 61a are arranged in equal pitches in the vertical direction. The first cutting apparatus 401 is located within the area for rotational movement of the carrying belts 61a.

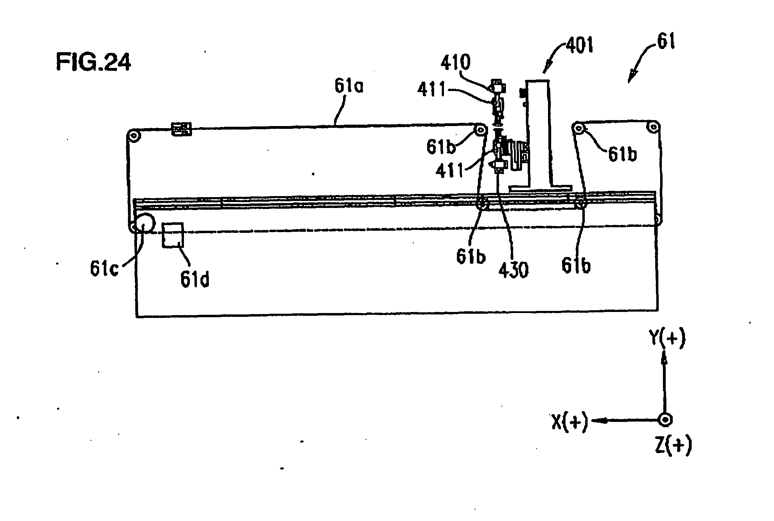

Figure 24 is a side view showing a structure of a carrying belt 61a provided in the first carrying mechanism 61. The carrying belts 61a are wound to and hang on two pairs of movable rollers 61b. The two pairs of the movable rollers 61b are arranged so as to fit into the recess portion having a concave shape.

The carrying belts 61a are rotated by driving motors 61o. The mother bonded substrate 200 in the vertical position is carried by the rotating carrying belts 61a in the horizontal direction while keeping the vertical position. When the driving motors 61c are stopped, the rotational movement of the carrying belts 61a is stopped, and the bonded substrate 200 is also stopped to be carried. The stopped carrying belts 61a are prevented from sliding by clamp mechanisms 61d to become surely secured.

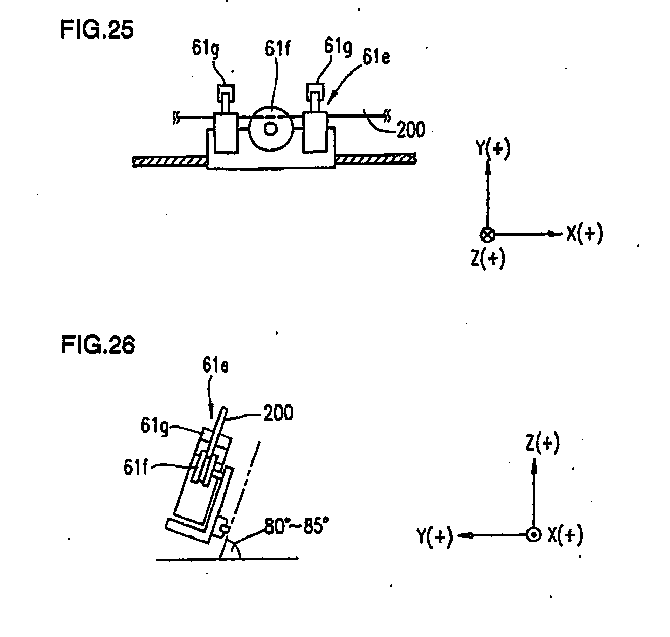

As shown in Figures 22 and 23, below the lowest carrying belt 61a, a plurality of supporting members 61e for supporting lower side edges of the mother bonded substrate 200 carried to the predetermined position are provided so as to line up in a horizontal direction. Figure 25 is a front view showing a structure of a supporting member 61e; and Figure 26 is a side view thereof. The supporting member 61e includes a guide roller 61f which engages with the lower side edge of the mother bonded substrate 200 and a pair of securing portions 61g for claming and securing the lower side edge of the mother bonded substrate 200 on both sides of the guide roller 61f.

The mother bonded substrate 200 carried by the carrying belts 61a in the horizontal direction is guided by the guide rollers 61f of the supporting members 61e. When the mother bonded substrate 200 reaches the predetermined position, it is secured by the securing portions 61g.

The mother bonded substrate 200 secured by the securing portions 61g of the supporting members 61e is secured by a plurality of securing portions 61g provided with appropriate spaces there between in the vertical direction at a side edge on the upstream side in the carrying direction.

As described above, the first carrying mechanism 61 carries the mother bonded substrate 200 in the vertical position to the predetermined position by the carrying belts 61a and secures it. The mother bonded substrate 200 secured by the first carrying mechanism 61 is out by the first cutting apparatus 401 along the vertical direction. The first cut substrates 201 cut by the first cutting apparatus 401 are rotated by 90° by the first rotation mechanism 71 while keeping the vertical position.

The first rotation mechanism 71 includes a supporting beam 71a bridging between upper and lower guide rails 91, and an absorbing apparatus 71b. The supporting beam 71a can move in parallel along the upper and lower guide rails 91 in the horizontal direction. The absorbing apparatus 71b can move along the supporting beam 71a.

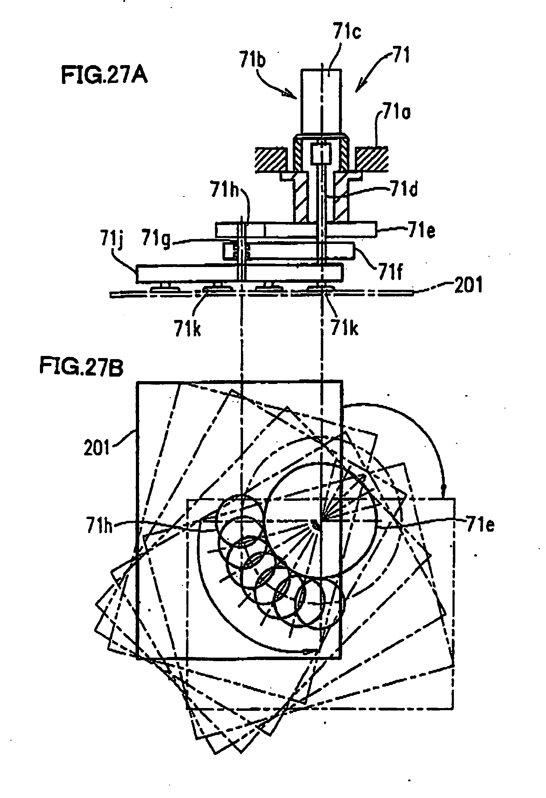

Figure 27A is a diagram showing a structure of the absorbing apparatus 71b. The absorbing apparatus 71b includes a servo motor 71c attached to the supporting beam 71a. A driving shaft 71d is attached to a driving axis of the servo motor 71c. To the shaft 71d, a first gear 71e is integrally attached, and an end portion of an arm 71f is also integrally attached. The arm 71f rotates around the driving shaft 71d by the rotation of the driving shaft 71d. A rotating shaft 71g is supported on a tip portion of the arm 71f so as to movable. The rotating shaft 71g penetrates through the arm 71f. To one end of the rotating shaft 71g, a second gear 71h is integrally attached. The first gear 71e and the second gear 71h engage each other. The number of teeth of the second gear 71h is one half of the number of teeth of the first gear 71e. When the first gear 71e rotates by 90°, the second gear 71h rotates by 180° in the opposite direction. The first gear 71e and the second gear 71h are formed of an engineering plastic. The materials may be, for example, ABS, polycarbonate, and the like.

To the other end of the rotating shaft 71g, a central portion of an absorption pad attachment plate 71j is integrally attached. On a surface of the absorption pad attachment plate 71j, a number of absorption pads 71k which adsorbs the first cut substrate 201 are provided.

In the first rotation mechanism 71 having such a structure, when the adsorption pads 71k attached to the absorption pad attachment plate 71j adsorbs the first out substrate 201 secured in the vertical position, the servo motor 71c is driven and the driving shaft 71d is rotated by 90° in a direction opposite to the clockwise direction when viewed from the substrate side. When the driving shaft 71d is rotated by 90°, the arm 71f rotates around the driving shaft 71d by 90° in a direction opposite to the clockwise direction when viewed from the substrate side. Thus, the absorption pad attachment plate 71j attached to the tip portion of the arm 71f integrally rotates with the arm 71f around the driving shaft 71d by 90° in a direction opposite to the clockwise direction when viewed from the substrate side. In this case, the rotating shaft 71g attached to the absorption pad attachment plate 71j also rotates around the driving shaft 71d.

At this time, the first gear 71e attached to the driving shaft 71d also rotates in a direction opposite to the clockwise direction when viewed from the substrate side The second gear 71h to which the rotation is transferred by the first gear 71e rotates by 180° in the clockwise direction when viewed from the substrate side. Thus, the absorption pad attachment plate 71j autorotates around the rotating shaft 71g by 180° in the clockwise direction when viewed from the substrate side while rotating around the driving shaft 71d by 90° in a direction opposite to the clockwise direction when viewed from the substrate side. As a result, as shown in Figure 27B, the first cut substrates 201 absorbed by the absorption pads 71k is rotated by 90° in the clockwise direction when viewed from the substrate side within a relatively small space with its center position for the rotation being shifted.

In the above description of the absorbing apparatus 71b, an example where the absorbing apparatus 71b is located on a central portion of the supporting beam 71a is described. However, the absorbing apparatus 71b is movable along the supporting beam 71a in the vertical direction.

The first cut substrate 201 rotated by 90° by the first rotation mechanism 71 is carried in the horizontal direction, and placed on the guide rails of the supporting members 62e of the second carrying mechanism 62 without giving a shock to the first cut substrate 201. As shown in Figure 22, the second carrying mechanism 62 includes a plurality of carrying belts 62a having a similar structure as the carrying belts 61a provided in the first carrying mechanism 61. The lower edges of the first cut substrates 201 are held and secured by supporting members 62e similar to the supporting members 61e provided in the first carrying mechanism 61. Further, the side edge of first cut substrate 201 on the downstream side in the carrying direction is secured by the securing portions 62g having a similar structure as the securing portions 61g provided in the first carrying mechanism 61 (see Figure 23).

The first cut substrates 201 carried by the second carrying mechanism 62 are cut by the second cutting apparatus 402. The second cut substrates 202 cut by the second cutting apparatus 402 are rotated by 90° by the second rotation mechanism 72 while keeping the vertical position. The second rotation mechanism 72 has a structure similar to the rotation of the first rotation mechanism 71, and includes a supporting beam 72a and an absorbing apparatus 72b. The absorbing apparatus 72b can move in the vertical direction along the supporting beam 72a.

The second cut substrates 202 rotated by the second rotation mechanism 72 are held in the vertical position by a vertical table 65 in the vertical position. Unnecessary portions of the lower side edges of one of the substrates and unnecessary portions in the side edge on the upstream side in the carrying direction are cut by the scribing apparatus 81. The vertical table 65 adsorbs the second cut substrates 202 in the vertical direction to keep them in the vertical position.

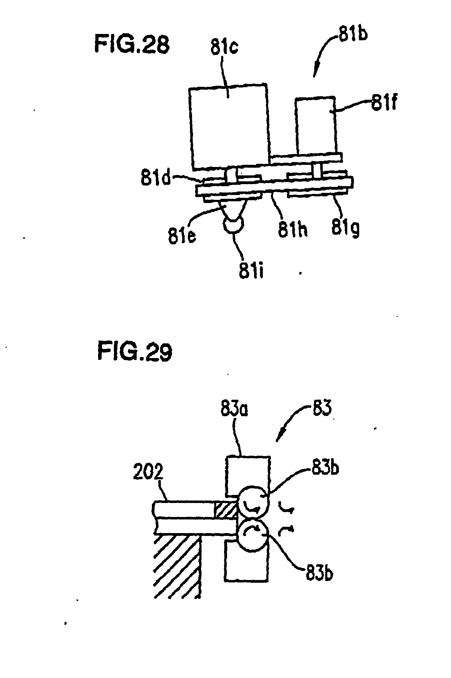

The scribing apparatus 81 includes a scribing unit 81b shown in Figure 28 which is provided on a guide beam 81a bridging between the upper and lower guide rails 91. The guide beam 81a moves in parallel in the horizontal direction along the guide rails 91. The scribing unit 81b moves along the guide beam 81a.

The scribing unit 81b includes a slider 81c sliding along the guide beam 81a. A toothed pulley 81d is rotatably attached to the slider 81c. A holder 81e is integrally attached to the toothed pulley 81d. A cutter wheel 81i is rotatably supported by the holder 81e. The cutter wheel 81i has a similar structure as the cutter wheels used in the above-described cutting apparatus 400 and the like. In the slider 81a, energizing means (not shown) for applying load to the cutter wheel 81i during scribing steps is provided.

A servo motor 81f is provided in the slider 81c. A toothed pulley 81g is integrally attached to the driving axis of the servo motor 81f. A toothed belt 81h is wound around the toothed pulley 81g and the toothed pulley 81d attached to the slider 81c.

When the servo motor 81f is driven to rotate, the rotation is transferred to the holder 81e via the toothed pulley 81g, toothed belt 81h, and the toothed pulley 81d. The holder 81e is rotated by 90°. Thus, the cutter wheel 81i can scribe along two directions perpendicular to each other.

The second cut substrate 202 held in the vertical position by the vertical table 65 is cut by the scribing unit 81b of the scribing apparatus 81 respectively at the lower side edge of one of the substrates facing the scribing unit 81b and the side edge in the X axis (+) direction.

For cutting the lower side edge of one of the substrates in the second out substrate 202, the servo motor 81f is driven such that the cutter wheel 81i of the scribing unit 81b in the scribing apparatus 81 is in the horizontal position along its lower side edge. The cutter wheel 81i in the horizontal position is located along the lower side edge to be cut of the second cut substrate 202 held in the vertical position, and the supporting beam 81a is moved in the horizontal direction along the side edge. In this way, a scribing line is formed along the lower side edge to be cut.

For cutting the side edge of the second cut substrate 202 along the vertical direction, the servo motor 81f is driven such that the cutter wheel 81i of the scribing unit 81b in the scribing apparatus 81 can scribe in the vertical direction along the side edge. The cutter wheel 81i which is allowed for scribing in the vertical direction is located along the side edge to be cut of the second cut substrate 202 held in the vertical position, and the scribing unit 81b is moved in the vertical direction along the guide beam 81a so as to run along the side edge. In this way, a scribing line is formed along the side edge in the vertical direction to be cut.

Near the lower side edge of the vertical table 65 for supporting the second cut substrate 202 in the vertical position, a first unnecessary portion removing mechanism 83 for removing unnecessary portions at the lower side edges in the horizontal position of the second cut substrate 202 held by the vertical table 65 is provided. Near the side edge of the vertical table 65 on the upstream side in the carrying direction, a second unnecessary portion removing mechanism 84 for removing unnecessary portions at the side edge in the vertical position on the X axis (-) direction side of the second cut substrate 202 held by the vertical table 65 is provided.

The first unnecessary portion removing mechanism 83 is formed by arranging a plurality of removing roller portions 83a respectively having a pair of opposing rollers 83b as shown in Figure 29 with a predetermined pitch in the X axis horizontal direction. The opposing rollers 83b provided in each of the removing roller portions 83a are energized in directions approximating each other. The lower side edge of the second cut substrate 202 which is an unnecessary portion is inserted between the rollers 83b. The rollers 83b rotate in only one direction of the insertion direction of the second cut substrate 202 into rollers 83b. The rotation directions of a pair of opposing rollers 83b are respectively set so as to rotate in opposite direction.

The second unnecessary portion removing mechanism 84 has a similar structure, and is formed by arranging a plurality of removing roller portions 84a respectively including a pair of opposing rollers with a predetermined pitch in the vertical direction.

Once the scribing line is formed on the lower side edge of the second cut substrate 202 held by the vertical table 65 which is the unnecessary portion, the first unnecessary portion removing mechanism 83 is approached relatively to the lower side edge of the second cut substrate 202, and the side edge is inserted between the pair of opposing rollers 83b. In this case, the rollers 83b are pressed to the side edge of the second out substrate 202 with being rotated in a direction in which the second cut substrate 202 is to be inserted. In this way, only the side edge which is the unnecessary portion in the second cut substrate 202 with the scribing lines formed thereon is cut with the pressure of the rollers 83b. Only the side edge which is the unnecessary portion is separated when the second cut substrate is pulled out from the rollers.

The second unnecessary portion removing mechanism 84 similarly cuts only the side edge along the vertical direction which is the unnecessary portion in the second cut substrate 202 with the scribing line formed thereon.

Further, the substrate cutting system according to the present embodiment is effectively applied for producing panel substrates by cutting the second cut substrates when a one drop fill method is employed. The scribing apparatus 81 is used for forming terminal portions of the panel substrates from the second cut substrates which have been cut into the size approximately equal to the size of the liquid crystal panel substrates. The mother bonded substrate 200 is formed into panel substrates having a predetermined shape.

The substrate cutting system 1000 according to the present embodiment may be formed without the scribing apparatus 81 when the first cut substrates 201 are out by the second cutting apparatus to produce predetermined panel substrates (second cut substrates 202).

### <Embodiment 5>

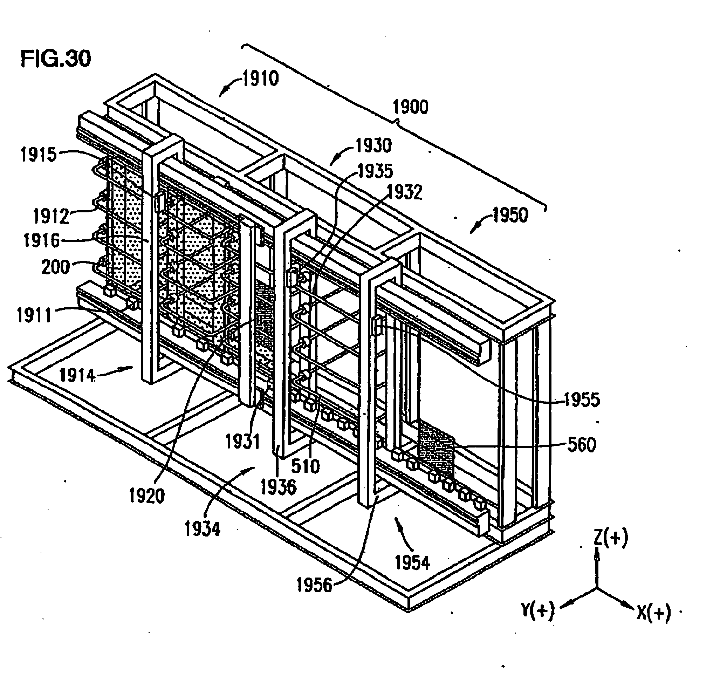

Figure 30 is a perspective view showing yet another example of the substrate cutting system. The substrate cutting system 1900 includes: a first cutting system 1910 for cutting the mother bonded substrate 200 into first out substrates 510 along the vertical direction or a direction slightly tilted from the vertical direction; a first rotation carrying apparatus 1920 for rotatably holding the first out substrates 510 and carrying to a second cutting system 1930; the second cutting system 1930 for cutting the first cut substrates 510 into second cut substrates 560 along the vertical direction or a direction slightly tilted from the vertical direction; a carrying robot for holding the second cut substrates 560 and carrying to a third cutting apparatus 1950, which is not shown; and the third cutting apparatus 1950 for cutting the second out substrates 560 held by the carrying robot into third cut substrates.

In the substrate cutting system 1900 shown in Figure 30, the first cutting system 1910, the second cutting system 1930, and the third cutting apparatus 1950 are integrally provided.

The mother bonded substrate 200 is located in the position vertical or slightly tilted from the vertical. Herein, the position slightly tilted from the vertical means a position tilted by 5° to 10° from the vertical, i.e., tilted by 80° to 85° from the horizontal.

The first cutting system 1910 includes a first substrate carrying apparatus 1912 for carrying the mother bonded substrate 200 and a first cutting apparatus 1914 for cutting the mother bonded substrate 200. The first cutting apparatus 1914 includes a first vertical cutting unit 1915 for cutting the mother bonded substrate 200 in the position vertical or slightly tilted from the vertical (hereinafter, the term "vertical position" includes the tilted position), and a first bridge portion 1916 on which the first vertical cutting unit 1915 is attached movably in the vertical direction. Roller portions 1911 help in carrying the mother bonded substrate 200 and the first cut substrates 510 in the first cutting system 1910. The first vertical cutting unit 1915 moves in the vertical direction along the first bridge portion 1916 and cuts the mother bonded substrate 200 into the first cut substrates 510.

The first vertical cutting unit 1915 includes a first cutting device 410 and the second cutting device 430 in Embodiment 1. The first cutting apparatus 1914 has a similar structure as the first cutting apparatus 401 described in Embodiment 4. Thus, detailed descriptions are omitted.

The first substrate carrying apparatus 1912 may carry the mother bonded substrate 200 and the first cut substrates 510 by using a belt as shown in Figure 30. The first substrate carrying apparatus 1912 preferably has a structure similar to that of the first transfer mechanism 61 described in Embodiment 4.

The first out substrates 510 out by the first cutting system 1910 is rotated by 90° by the first rotation carrying apparatus 1920 while keeping the vertical position, and is placed on roller portions 1931 which assist in carrying the substrates included in a second substrate carrying apparatus 1932 of the second substrate cutting system 1920 without giving a shock.

The first rotation carrying apparatus 1920 has a similar structure as the first rotation mechanism 71 described in Embodiment 4. Thus, a detailed description is omitted.

The second cutting system 1930 includes the second substrate carrying apparatus 1932 for carrying the first cut substrates 510 and a second cutting apparatus 1934 for cutting the first out substrates 510 along the vertical direction. The second cutting apparatus 1934 includes a second vertical cutting unit 1935 for cutting the first out substrates 510 and a second bridge portion 1936 on which the second vertical cutting unit 1935 is attached movably in the vertical direction. The roller portions 1931 help in carrying the first cut substrates 510 and the second out substrates 560 in the second cutting system 1930. The second vertical cutting unit 1935 moves in the vertical direction along the second bridge portion 1936.

The second vertical cutting unit 1935 includes a first cutting device 410 and the second cutting device 430 in Embodiment 1. The second cutting apparatus 1934 has a similar structure as the first cutting apparatus 401 described in Embodiment 4. Thus, detailed descriptions are omitted.

The third cutting system 1950 includes a carrying robot for holding and carrying the second cut substrates 560 and a third cutting apparatus 1954 for cutting the second cut substrates 560 along the vertical direction. The third cutting apparatus 1954 includes a third vertical cutting unit 1935 for cutting the second cut substrates 560 and a third bridge portion 1956 on which the third vertical cutting unit 1955 is attached movably in the vertical direction. The third vertical cutting unit 1955 moves in the vertical direction along the third bridge portion 1956.

The third vertical cutting unit 1955 includes a first cutting device 410 and the second cutting device 430 in Embodiment 1. The third cutting apparatus 1954 has a similar structure as the first cutting apparatus 401 described in Embodiment 4. Thus, detailed descriptions are omitted.

The second substrate carrying apparatus 1932 may carry the first out substrates 510 and the second cut substrates 560 with a form of a belt as shown Figure 30. Since the second substrate carrying apparatus 1932 has a structure similar to that of the first carrying mechanism 61 described in Embodiment 4, a detailed description is omitted.

The carrying robot holds the second cut substrates 560 and carries them to the predetermined processing position of the third cutting system 1950.

The third cutting unit 1955 moves in the vertical direction along the second bridge portion 1956. Thus, the predetermined end portions of the second out substrates 560 held by the carrying robot form the terminal portions of the panel displays. Further, the third vertical cutting unit 1955 may also be applied to the case where only the upper substrate or the lower substrate of the second out substrates 560 is cut to form terminal portions of the panel substrates.

The second out substrates 560 with terminal portions formed on one end of the second cut substrates 560 are rotated in the vertical position by the carrying robot and again carried to the predetermined processing position of the third cutting system 1950.

When the third vertical cutting unit 1955 is moved in the vertical direction along the second bridge portion 1956, another end of the second cut substrates 560 carried by the carrying robot are cut and the terminal portions of the panel substrates are formed. At this time, only the upper substrate or the lower substrate of the second cut substrates 560 may be cut to form terminal portions of the panel substrates.

The second cut substrates 560 may be rotated and moved by the carrying robot and cut by the third vertical cutting unit 1955 for the number of the times in accordance with the terminal portions formed by breaking steps by the third vertical cutting unit 1955 to form terminal portions. The second cut substrates 560 may be removed from the substrate cutting system 1900 by the carrying robot once the cutting of edge surfaces and formation of the terminal portions of the panel substrates are finished.

The third cutting system 1950 is used for further cutting the second cut substrates. For example, it is used for forming terminal portions from the second cut substrates which has been cut in a size substantially equal to the size of the panel substrates. For example, it is effectively applied in the case where the second cut substrates are out to produce the panel substrates when a one drop fill method is employed, and the second cut substrates are out.

The one drop fill method is a method where a sealing member is attached to one substrate and liquid crystal is dropped in an area surrounded by the sealing member before two substrates are bonded to each other. Recently, there has been a strong demand for increasing the size of liquid crystal mother glass substrates. In order to respond to such a demand, it is necessary to cut liquid crystal mother glass substrates having a large size. When such large-sized liquid crystal mother glass substrates are produced by using the one drop fill method, it is desirable to reinforce even the portions which will become unnecessary parts to improve the bonding strength of two substrates in order to prevent the liquid crystal inside the liquid crystal mother glass substrate from leaking. When such mother bonded substrates are cut by the substrate cutting system 1900 described in the present embodiment, there may be the case where terminal portions of the liquid crystal panel substrates cannot be formed in the second out substrates 560 cut by the second cutting apparatus 1930 due to a seal attached for reinforcement. In this case, the third cutting apparatus 1950 cuts the unnecessary parts from the second cut substrates 560, and produces the panel substrates with the terminal portions.

When the first cut substrate 510 is cut into predetermined panel substrates (second out substrates 560) by the second cutting apparatus 1934, the substrate cutting system 1900 according to the present embodiment may be formed without the third cutting system 1950.

### <Embodiment 6>

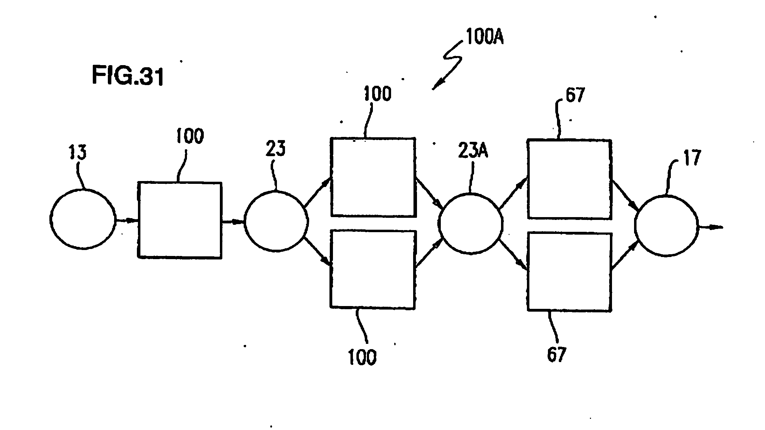

Figure 31 is a diagram showing a structure of a substrate cutting line system 100A which is an example of an embodiment using a plurality of substrate cutting systems 100 described in Embodiment 1. The substrate cutting systems 100 in the substrate cutting line system 100A have structures similar to that of the above-described substrate cutting system 100, and have the substrate supporting apparatuses 300 and the cutting apparatuses 400. The mother bonded substrate 200 supplied by a material supplying robot 13 is out into the first cutting substrates 500 and supplied to a carrying robot 23. The carrying robot 23 provides the first cutting substrates 500 cut by a substrate cutting system 100 to the substrate cutting systems 100 each having a similar structure as the above-described substrate cutting system and the substrate cutting apparatus 300 and a cutting apparatus. The substrate cutting systems 100 cut the first cutting substrates 500 supplied from the carrying robot 23 and supply panel substrates (second cut substrates) 550 to a carrying robot 23A. The carrying robot 23A supplies the panel substrates 550 to two chamfering apparatuses 67. The chamfering apparatuses 67 chamfer the edges of the panel substrates supplied from the carrying robot 23A and supply them to a material removing robot 17. The material removing robot 17 carries the panel substrates chamfered by the chamfering apparatuses 67 to the next process.

By providing the substrate cutting systems 100 in a plurality of stages as described above, the tact time can be further improved. Furthermore, even when one of the substrate cutting systems 100 has a breakdown, cutting operations can be continued by other substrate cutting systems 100.

### <Embodiment 7>

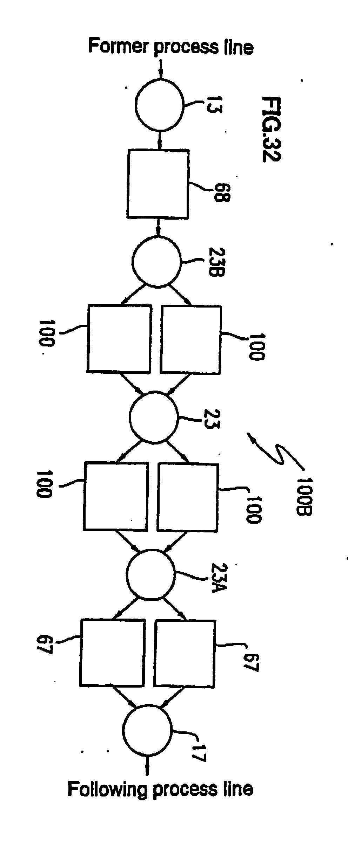

Figure 32 is a diagram showing a structure of a substrate cutting line system 100B which is another example of an embodiment using a plurality of substrate cutting systems 100 described in Embodiment 1.

Figure 32 shows an example of the substrate cutting line system having a structure in which four substrate cutting systems 100 and two chamfering apparatuses 67 are arranged in two lines in parallel and a material supplying cassette 68, the material supplying robot 13, carrying robots 23, 23A, and 23B and the material removing robot 17 are respectively arranged.

The number of the substrate cutting systems 100 is not limited to four but a plurality of them may be arranged. The number of the chamfering apparatuses 67 is not limited to two but a plurality of them may be arranged. At least one material supplying cassette 68, material supplying robot 13, carrying robots 23, 23A, and 23B and material removing robot 17 are required in the substrate cutting line system.

By providing the substrate cutting systems 100 in a plurality of stages as described above, the tact time can be further improved. Furthermore, even when one of the substrate cutting systems 100 has a breakdown, cutting operations can be continued by other substrate cutting systems 100.

Figure 33 shows a process where the mother bonded substrate 200 is placed such that the mother CF substrate 230 is on the lower side, and the mother TFT substrate 220 on the upper side is first out. Herein, the mother bonded substrate 200 is placed on a flat table 1210. For the sake of simplicity of the description, only an example of cutting the mother bonded substrate 200 in one direction, the Y axis direction, will be described.

In Figure 33A, the mother bonded substrate 200 is held on the table 1210 with the mother TFT substrate 220 being on the upper side and the mother CP substrate 230 being the lower surface. The mother TFT substrate 220 is scribed by a cutter wheel 1220.

In Figure 33B, the mother bonded substrate 200 is reversed upside down. The mother bonded substrate 200 is held on a mat 1240 placed on a table 1250 such that the mother CF substrate 230 is on the upper side and the mother TFT substrate 220 is on the lower side. A breaking bar 1230 presses the mother CF substrate 230 along the scribing lines to cut the mother TFT substrate 220.

In Figure 33C, the mother bonded substrate 200 is held on a table 1260 with the mother CP substrate 230 remaining on the upper side and the mother TFT substrate 220 remaining on the lower side. The cutter wheel 1220 scribes the mother CF substrate 230. In this case, the scribing lines formed on the mother CF substrate 230 are formed so as to expose terminal portions.

In Figure 33D, the mother bonded substrate 200 is reversed upside down again. Thus, the mother bonded substrate 200 is placed on a mat 1270 placed on a table 1280 such that the mother TFT substrate 220 is on the upper side and the mother CF substrate 230 is on the lower side. In such a state, the breaking bar 1230 presses the mother TFT substrate 220 along the scribing lines to out the mother CF substrate 230.

In this way, two out substrates 1215 are produced. In this example, unnecessary portions R4, R5 and R6 are formed in the side edge portions and central portion of the mother bonded substrate 200. The unnecessary portions R5 and R6 are formed to have uneven surfaces so as to expose the terminal portions of the mother TFT substrate 220.

Then, as shown in Figure 33E, the entire mother bonded substrate 200 is adsorbed by an adsorption pad (not shown) and then carried to the position above a table 1290 having an opening 1291 and placed on the table 1290. In this case, the mother bonded substrate 200 is placed on the table 1290 such that the unnecessary portions R4, R5, and R6 do not contact with a surface of the table 1290. When the adsorption of the adsorption pad is stopped, the cut substrates 1215 remain on the table 1290, and the unnecessary portion R4 which does not include an uneven surface, as well as the unnecessary portions R5 and R6 which include uneven surfaces are removed by a free fall.

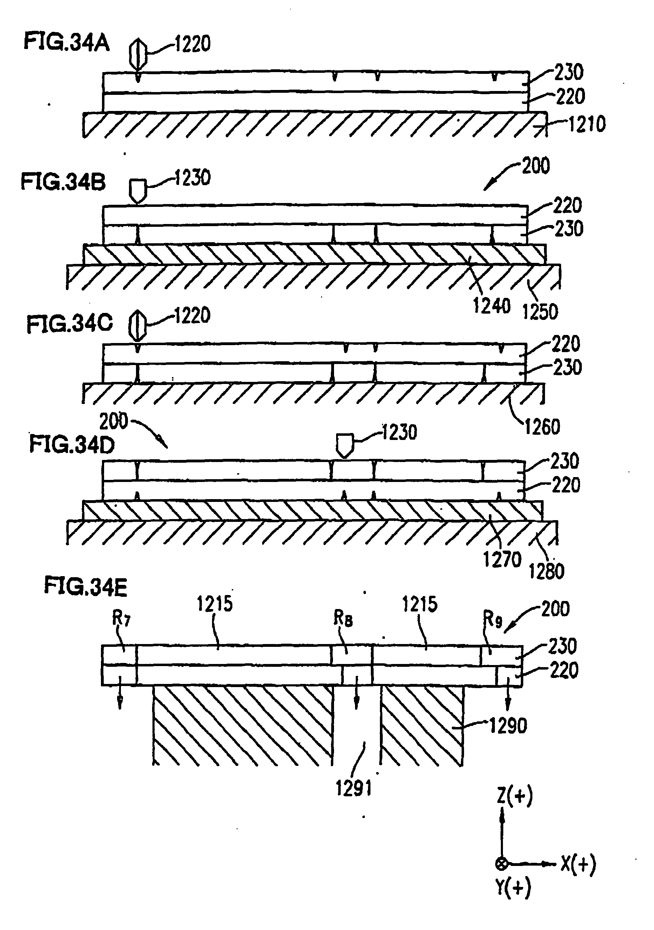

As a comparative example, an example which the mother CF substrate 230 is cut before the mother TFT substrate 220 is cut will be described with reference to Figure 34. The mother bonded substrate 200 is also placed on a flat table 1310.

In Figure 34A, the mother bonded substrate 200 is held on the table 1210 with the mother CF substrate 230 being on the upper side and the mother TFT substrate 220 being on the lower side. The mother CF substrate 230 is scribed by the cutter wheel 1220.

In Figure 34B, the mother bonded substrate 200 is reversed upside down. The mother bonded substrate 200 is held on the mat 1240 placed on the table 1250 such that the mother TFT substrate 220 is on the upper side and mother CF substrate 230 is on the lower side. The breaking bar 1230 presses the mother TFT substrate 220 along the scribing lines to cut the mother CF substrate 210.

In Figure 34C, the mother bonded substrate 200 is placed on the table 1260 with the mother TFT substrate 220 remaining on the upper side and the mother CF substrate 230 remaining on the lower side. The cutter wheel 1220 scribes the mother TFT substrate 220. In this case, the scribing lines formed on the mother TFT substrate 220 are shifted from the scribing lines formed on the mother CF substrate 210 so as to expose the terminal portions.

In Figure 34D, the mother bonded substrate 200 is reversed upside down again. Thus, the mother bonded substrate 200 is placed on the mat 1270 placed on the table 1280 such that the mother CF substrate 230 is on the upper side and the mother TFT substrate 220 is on the lower side. In such a state, the breaking bar 1230 presses the mother CF substrate 230 along the scribing lines to cut the mother TFT substrate 220.

In this way, two cut substrates 1215 are produced. In this example, unnecessary portions R7, R8 and R9 are formed in the side edge portions and central portion of the mother bonded substrate 200. The unnecessary portions R8 and R9 are formed to have uneven surfaces so as to expose the terminal portions of the mother TFT substrate 220. The portions having larger areas are located on the upper side.

In this case, as shown in Figure 34D, a portion to be an unnecessary part R8 of the second substrate 230 which has been already cut is pressed by the breaking portion 1230. Thus, a small chip may undesirably be generated in the terminal portions which may be required after cutting.

Then, as shown in Figure 34E, the entire mother bonded substrate 200 is carried to the table 1290 including the opening 1291 by an absorption pad (not shown) and placed on the table 1290. However, the unnecessary part R8 cannot be dropped by a free fall even when absorption by the absorption pad is stopped. The unnecessary part R9 can free-fall, but the unnecessary part R9 may rub the terminal portion and cause damage or a small chip in the terminal portion.

Alternatively, the unnecessary parts R8 and R9 have to be removed by using an apparatus in Figure 34E.

In the steps of cutting the mother TFT substrate 220 before cutting the mother CF substrate 230 shown in Figure 33 as described above, the breaking bar 1230 does not press the unnecessary parts R8 and R9 which have already been cut. Thus, it is unlikely to generate a small chip in the terminal portions.

Furthermore, the unnecessary parts R4, R5, and R6 are dropped by a free fall without rubbing the terminal portions. This also reduces a risk of generating a small chip in the terminal portions.

In the substrate cutting system according to the present invention, as described in Embodiment 1, the mother bonded substrate is sequentially cut from the edge. Thus, the unnecessary parts which have already been cut are not pressed, nor do the unnecessary parts remain on the tables as described above.

Regarding the embodiments of the present invention, the substrate cutting systems (including substrate cutting line systems) for the mother bonded substrate to be cut into the display panel substrates of the liquid crystal display apparatuses, which is an example of a bonded brittle material substrates, has been mainly described. However, the present invention is not limited to this. The substrate cutting system according to the present invention can be effectively applied in cutting mother bonded substrates of brittle material substrates, such as plasma display panels which is a type of flat display panels, organic EL panels, inorganic El panels, transmissive projector substrates, reflective projector substrates, and the like.

The substrate cutting system according to the present invention can also be used for cutting a single plate of brittle material substrates, such as, glass substrates, quartz substrates, sapphire substrates, semiconductor wafers, ceramics, and the like.

### INDUSTRIAL APPLICABILITY

A substrate cutting system according to the present invention includes a substrate carrying apparatus 300 including a plurality of tables 331 which are independently movable, and a cutting apparatus 400 for cutting upper and lower substrates in a mother bonded substrate in one direction at the same time by a cutting apparatus including a first cutting device and a second cutting device. The substrate cutting system sequentially cuts the mother bonded substrate on the substrate carrying apparatus 300 and carries a bonded substrate which has been cut to the material removing position. Thus, it is not necessary to lift the substrate under the process and carry to the apparatus for the following process. Therefore, it is possible to efficiently out the substrates without dropping some of the substrates of the bonded substrate while being carried, or damaging the bonded substrate. Further, the structure of the substrate cutting system is compact.

Furthermore, since the substrate cutting system according to the present invention does not require a reverse apparatus and a breaking apparatus in the substrate cutting system, the area for installation can be significantly reduced.

## Claims

1. A substrate cutting system (100; 1500; 1800; 1000; 1900) for cutting a bonded substrate formed by bonding a first substrate and a second substrate into a plurality of cut substrates, the system for cutting a substrate of the bonded substrate comprising:
a cutting apparatus (400; 1700; 1814, 1824; 401, 402; 1914, 1934, 1954) comprising
a first cutting device (410; 1712, 1722, 1732) located so as to face the first substrate, wherein
the first cutting device (410; 1712, 1722, 1732) comprises a scribing portion (1412) in which first scribing means (412) for forming a scribing line on the first substrate is provided,
the first cutting device (410; 1712, 1722, 1732) further comprises a back up portion (1414) for supporting a surface of the first substrate and a breaking portion (1416) for cutting the first substrate along the scribing line formed on the first substrate;
**characterized by**
a second cutting device (430; 1714, 1724, 1734) located so as to face the second substrate; wherein
the second cutting device (430; 1714, 1724, 1734) comprises a scribing portion (1412) in which second scribing means (412) for forming a scribing line on the second substrate is provided,
the back up portion (1414) of the first cutting device (410; 1712, 1722, 1732) supports a surface of the first substrate when the second scribing means (412) of the scribing portion (1412) of the second cutting device (430; 1714, 1724, 1734) scribes the second substrate, in correspondence with the portion to be scribed, and
the second cutting device (430; 1714, 1724, 1734) further comprises a back up portion (1414) for supporting a surface of the second substrate when the first scribing means (412) of the scribing portion (1412) of the first cutting device (410; 1712, 1722, 1732) scribes the first substrate, in correspondence with the portion to be scribed, and a breaking portion (1416) for cutting the second substrate along the scribing line formed on the second substrate.

2. A system for cutting a substrate of a bonded substrate according to claim 1, wherein:
the first cutting device (410; 1712, 1722, 1732) locates the back up portion (1414) so as to support a surface of the first substrate when breaking means (416) of the breaking portion (1414) of the second cutting device (430; 1714, 1724, 1734) cuts the second substrate, in correspondence with the portion to be cut; and
the second cutting device (430; 1714, 1724, 1734) locates the back up portion (1414) so as to support a surface of the second substrate when breaking means (416) of the breaking portion (1416) of the first cutting device (410; 1712, 1722, 1732) cuts the first substrate, in correspondence with the portion to be cut.

3. A system for cutting a substrate of a bonded substrate according to claim 1, further comprising a substrate carrying apparatus (300; 1550; 1812, 1822; 61, 62; 1912, 1932) which sequentially positions lines to be cut of the bonded substrate with respect to the cutting apparatus (400; 1700; 1814, 1824; 401, 402; 1914, 1934, 1954).

4. A system for cutting a substrate of a bonded substrate according to claim 3, wherein the substrate carrying apparatus (300; 1550; 1812, 1822; 61, 62; 1912, 1932) comprises a plurality of tables (331; 1531; 65).

5. A system for cutting a substrate of a bonded substrate according to claim 4, wherein the tables (331; 1531; 65) are independently movable.

6. A system for cutting a substrate of a bonded substrate according to claim 4, wherein the tables (331; 1531; 65) respectively comprise adsorption holes (370) for adsorbing the bonded substrate.

7. A system for cutting a substrate of a bonded substrate according to claim 1, wherein the breaking means (416) provided in each of the breaking portions of the first cutting device (410; 1712, 1722, 1732) and the second cutting device (430; 1714, 1724, 1734) press both sides of the scribing line.

8. A system for cutting a substrate of a bonded substrate according to claim 7, wherein the breaking means (416) are rollers each having a concave portion formed thereon.

9. A system for cutting a substrate of a bonded substrate according to claim 1, further comprising:
supporting rollers (1471-1473) included in the second cutting device (430; 1714, 1724, 1734); and
a belt (1474A) wound to the supporting rollers (1471-1473),
wherein a portion of the bonded substrate which has been cut is supported as the second cutting device (430; 1714, 1724, 1734) performing a cutting process moves.

10. A system for cutting a substrate of a bonded substrate according to claim 1, comprising a plurality of cutting devices (410, 430; 1712, 1722, 1732, 1714, 1724, 1734), and wherein the cutting devices are integrally movable in a scribing line direction.

11. A system for cutting a substrate of a bonded substrate according to claim 1, wherein:
a pair of the cutting apparatuses (1814, 1824; 401, 402; 1914, 1934) are provided and the substrate carrying apparatus (1812, 1822; 61, 62; 1912, 1932) is provided for each of the cutting apparatuses (1814, 1824; 401, 402; 1914, 1934), and
a cut substrate which has been cut by a cutting device of one of the cutting apparatuses (1814; 401; 1914) is carried by one of the substrate carrying apparatuses (1812; 61; 1912), which corresponds to the cutting apparatus (1814; 401; 1914), to the other substrate carrying apparatus (1822; 62; 1932) to be cut by another cutting device provided in correspondence with the other cutting apparatus (1824; 402; 1934).

12. A system for cutting a substrate of a bonded substrate according to claim 11, wherein the substrate carrying apparatuses (1812, 1822) are provided such that carrying directions for the bonded substrate and the cut substrate by the substrate carrying apparatuses (1812, 1822) are perpendicular to each other.

13. A system for cutting a substrate of a bonded substrate according to claim 11, wherein:
the substrate carrying apparatuses (61, 62; 1912, 1932) carry the bonded substrate with a surface of the bonded substrate being in parallel with the vertical direction; and
the first cutting device and the second cutting device of the cutting apparatus (401, 402; 1914, 1934) cuts the carried bonded substrate along the vertical direction.

14. A system for cutting a substrate of a bonded substrate according to claim 13, comprising a pair of the cutting apparatuses (401, 402; 1914, 1934) and further comprising a rotation carrying apparatus (71; 1920) for rotating a cut substrate which has been cut by one of the cutting apparatuses (401; 1914) in a direction perpendicular to the vertical direction,
wherein the cut substrate rotated by the rotation carrying apparatus (71; 1920) is cut by the other cutting apparatus (402; 1934) along the vertical direction.

15. A system for cutting a substrate of a bonded substrate according to claim 14, further comprising a scribing apparatus (81) for forming a terminal portion in the cut substrate which has been cut by the other cutting apparatus (402).

16. A system for cutting a substrate of a bonded substrate according to claim 14, further comprising a cutting apparatus (1954) for forming a terminal portion in the cut substrate which has been cut by the other cutting apparatus (1934).

17. A substrate cutting method for cutting a bonded substrate formed by bonding a first substrate and a second substrate into a plurality of cut substrates by a substrate cutting system (100; 1500; 1800; 1000; 1900), wherein the substrate cutting system (100; 1500; 1800; 1000; 1900) comprises:
a cutting apparatus (400; 1700; 1814, 1824; 401, 402; 1914, 1934, 1954) comprising
a first cutting device (410; 1712, 1722, 1732) located so as to face the first substrate,
wherein the first cutting device (410; 1712, 1722, 1732) supports a surface of the first substrate,
**characterized by**
a second cutting device (430; 1714, 1724, 1734) located so as to face the second substrate, and
wherein the first cutting device (410; 1712, 1722, 1732) supports a surface of the first substrate when the second substrate is scribed by the second cutting device (430; 1714, 1724, 1734), in correspondence with the portion to be scribed, and supports a surface of the first substrate when the second substrate is out by breaking means (416) of the breaking portion (1416) of the second cutting device (430; 1714, 1724, 1734), in correspondence with the portion to be cut, and
the second cutting device (430; 1714, 1724, 1734) supports a surface of the second substrate when the first substrate is scribed by the first cutting device (410; 1712, 1722, 1732), in correspondence with the portion to be scribed, and supports a surface of the second substrate when the first substrate is cut by breaking means (416) of the breaking portion (1416) of the first cutting device (410; 1712, 1722, 1732), in correspondence with the portion to be cut.

18. A method for cutting a substrate of a bonded substrate according to claim 17, wherein lines to be cut of the bonded substrate held by a substrate carrying apparatus (300; 1550; 1812, 1822; 61, 62; 1912, 1932) are sequentially positioned to predetermined positions with respect to the cutting apparatus (400; 1700; 1814, 1824; 401, 402; 1914, 1934, 1954), and the bonded substrate is sequentially cut along the lines to be out.

19. A method for cutting a substrate of a bonded substrate according to claim 18, wherein:
the substrate carrying apparatus (300; 1550; 1812, 1822; 61, 62; 1912, 1932) comprises a plurality of tables (331; 1531; 65); and,
before the cutting, the number of tables (331; 1531; 65) moved is selected in accordance with a cutting pattern of the bonded substrate, spaces between the tables (331; 1531; 65) are set such that the second cutting device (430; 1714, 1724, 1734) is moved along a line to be cut of the bonded substrate, and the bonded substrate is held on the selected tables (331; 1531; 65).

20. A method for cutting a substrate of a bonded substrate according to claim 19, wherein the tables (331; 1531; 65) holding cut substrates sequentially move to a material removing position for the cut substrates after the cutting.

21. A method for cutting a substrate of a bonded substrate according to claim 17, wherein the breaking means (416) included in each of the first cutting device (410; 1712, 1722, 1732) and the second cutting device (430; 1714, 1724, 1734) press both sides of the scribing line.

22. A method for cutting a substrate of a bonded substrate according to any one of claims 17 through 21, further comprising:
a supporting roller (1471-1473) included in the second cutting device (430; 1714, 1724, 1734); and
a belt (1474A) wound to the supporting roller(1471-1473),
wherein a portion of the bonded substrate which has been cut is supported as the second cutting device (430; 1714, 1724, 1734) performing a cutting process moves.

23. A method for cutting a substrate of a bonded substrate according to claim 17, wherein a plurality of cutting devices (410, 430; 1712, 1722, 1732, 1714, 1724, 1734) are provided, and the cutting devices (410, 430; 1712, 1722, 1732, 1714, 1724, 1734) integrally move and cut the bonded substrate along a plurality of lines to be out of the bonded substrate.

24. A method for cutting a substrate of a bonded substrate according to claim 17, wherein:
a pair of the cutting apparatuses (1814, 1824; 401, 402; 1914, 1934) are provided and the substrate carrying apparatus (1812, 1822; 61, 62; 1912, 1932) is provided for each of the cutting apparatuses (1814, 1824; 401, 402; 1914, 1934), and
a cut substrate which has been cut by a cutting device of one of the cutting apparatuses (1814; 401; 1914) is carried by one of the substrate carrying apparatuses (1812; 61; 1912), which corresponds to the cutting apparatus (1814; 401; 1914), to the other substrate carrying apparatus (1822; 62; 1932) to be cut by another cutting device provided in correspondence with the other cutting apparatus (1824; 402; 1934).

25. A method for cutting a substrate of a bonded substrate according to claim 24, wherein the substrate carrying apparatuses (1812, 1822) are provided such that carrying directions for the bonded substrate and the cut substrate by the substrate carrying apparatuses (1812, 1822) are perpendicular to each other.

26. A method for cutting a substrate of a bonded substrate according to claim 24, wherein:
the substrate carrying apparatuses (61, 62; 1912, 1932) carry the bonded substrate with a surface of the bonded substrate being in parallel with the vertical direction; and
the first cutting device and the second cutting device of the cutting apparatus (401, 402; 1914, 1934) cuts the carried bonded substrate along the vertical direction.

27. A method for cutting a substrate of a bonded substrate according to claim 26, comprising a pair of the cutting apparatuses (401, 402; 1914, 1934) and further comprising a rotation carrying apparatus (71; 1920) for rotating a cut substrate which has been cut by one of the cutting apparatuses (401; 1914) in a direction perpendicular to the vertical direction,
wherein the cut substrate rotated by the rotation carrying apparatus (71; 1920) is cut by the other cutting apparatus (402; 1934) along the vertical direction.

## Patentansprüche

1. Substratschneidsystem (100; 1500; 1800; 1000; 1900) zum Schneiden eines geklebten Substrats, das durch Kleben eines ersten Substrats und eines zweiten Substrats ausgebildet ist, in eine Vielzahl von geschnittenen Substraten, wobei das System zum Schneiden eines Substrats des geklebten Substrats Folgendes aufweist:
ein Schneidgerät (400; 1700; 1814, 1824; 401, 402; 1914, 1934, 1954) mit einer ersten Schneidvorrichtung (410; 1712, 1722, 1732), die angeordnet ist, um dem ersten Substrat zugewandt zu sein, wobei
die erste Schneidvorrichtung (410; 1712, 1722, 1732) einen Ritzabschnitt (1412) aufweist, in dem eine erste Ritzeinrichtung (412) zum Ausbilden einer Ritzlinie an dem ersten Substrat vorgesehen ist,
wobei die erste Schneidvorrichtung (410; 1712, 1722, 1732) des Weiteren einen Stützabschnitt (1414) zum Stützen einer Fläche des ersten Substrats und einen Brechabschnitt (1416) zum Schneiden des ersten Substrats entlang der Ritzlinie, die an dem ersten Substrat ausgebildet ist, aufweist,
**gekennzeichnet, durch**
eine zweite Schneidvorrichtung (430; 1714, 1724, 1734), die angeordnet ist, um dem zweiten Substrat zugewandt zu sein; wobei
die zweite Schneidvorrichtung (430; 1714, 1724, 1734) einen Ritzabschnitt (1412) aufweist, in dem eine zweite Ritzeinrichtung (412) zum Ausbilden einer Ritzlinie an dem zweiten Substrat vorgesehen ist,
der Stützabschnitt (1414) der ersten Schneidvorrichtung (410; 1712, 1722, 1732) eine Fläche des ersten Substrats, wenn die zweite Ritzeinrichtung (412) des Ritzabschnitts (1412) der zweiten Schneidvorrichtung (430; 1714, 1724, 1734) das zweite Substrat ritzt, in Übereinstimmung mit dem zu ritzenden Abschnitt stützt, und
die zweite Schneidvorrichtung (430; 1714, 1724, 1734) des Weiteren einen Stützabschnitt (1414) zum Stützen einer Fläche des zweiten Substrats, wenn die erste Ritzeinrichtung (412) des Ritzabschnitts (1412) der ersten Schneidvorrichtung (410; 1712, 1722, 1732) das erste Substrat ritzt, in Übereinstimmung mit dem zu ritzenden Abschnitt und einen Brechabschnitt (1416) zum Schneiden des zweiten Substrats entlang der Ritzlinie aufweist, die an dem zweiten Substrat ausgebildet ist.

2. System zum Schneiden eines Substrats eines geklebten Substrats nach Anspruch 1, wobei:
die erste Schneidvorrichtung (410; 1712, 1722, 1732) den Stützabschnitt (1414) anordnet, um eine Fläche des ersten Substrats in Übereinstimmung mit dem zu schneidenden Abschnitt zu stützen, wenn eine Brecheinrichtung (416) des Brechabschnitts (1414) der zweiten Schneidvorrichtung (430; 1714, 1724, 1734) das zweite Substrat schneidet; und
die zweite Schneidvorrichtung (430; 1714, 1724, 1734) den Stützabschnitt (1414) anordnet, um eine Fläche des zweiten Substrats in Übereinstimmung mit dem zu scheidenden Abschnitt zu stützen, wenn eine Brecheinrichtung (416) des Brechabschnitts (1416) der ersten Schneidvorrichtung (410; 1712, 1722, 1732) das erste Substrat schneidet.

3. System zum Schneiden eines Substrats eines geklebten Substrats nach Anspruch 1, des Weiteren mit einem Substrattragegerät (300; 1550; 1812, 1822; 61, 62; 1912, 1932), das sequenziell zu schneidende Linien des geklebten Substrats in Bezug auf das Schneidgerät (400; 1700; 1814, 1824; 401, 402; 1914, 1934, 1954) positioniert.

4. System zum Schneiden eines Substrats eines geklebten Substrats nach Anspruch 3, wobei das Substrattragegerät (300; 1550; 1812, 1822; 61, 62; 1912, 1932) eine Vielzahl von Tischen (331; 1531; 65) aufweist.

5. System zum Schneiden eines Substrats eines geklebten Substrats nach Anspruch 4, wobei die Tische (331; 1531; 65) unabhängig bewegbar sind.

6. System zum Schneiden eines Substrats eines geklebten Substrats nach Anspruch 4, wobei die Tische (331; 1531; 65) jeweils Adsorptionslöcher (370) zum Adsorbieren des geklebten Substrats aufweisen.

7. System zum Schneiden eines Substrats eines geklebten Substrats nach Anspruch 1, wobei die Brecheinrichtung (416), die in jedem von den Brechabschnitten der ersten Schneidvorrichtung (410; 1712, 1722, 1732) und der zweiten Schneidvorrichtung (430; 1714, 1724, 1734) vorgesehen ist, beide Seiten der Ritzlinie drückt.

8. System zum Schneiden eines Substrats eines geklebten Substrats nach Anspruch 7, wobei die Brecheinrichtung (416) Rollen sind, von denen jede einen konkaven Abschnitt an sich ausgebildet hat.

9. System zum Schneiden eines Substrats eines geklebten Substrats nach Anspruch 1, des Weiteren mit:
Stützrollen (1471-1473), die in der zweiten Schneidvorrichtung (430; 1714, 1724, 1734) umfasst sind; und
einem Riemen (1474A), der um die Stützrollen (1471-1473) gewickelt ist,
wobei ein Abschnitt des geklebten Substrats, das geschnitten worden ist, gestützt wird, wenn sich die zweite Schneidvorrichtung (430; 1714, 1724, 1734), die einen Schneidprozess durchführt, bewegt.

10. System zum Schneiden eines Substrats eines geklebten Substrats nach Anspruch 1, mit einer Vielzahl von Schneidvorrichtungen (410; 430; 1712, 1722, 1732, 1714, 1724, 1734), wobei die Schneidvorrichtungen in einer Ritzlinienrichtung einstückig bewegbar sind.

11. System zum Schneiden eines Substrats eines geklebten Substrats nach Anspruch 1, wobei:
ein Paar der Schneidgeräte (1814, 1824; 401, 402; 1914, 1934) vorgesehen ist und das Substrattragegerät (1812, 1822; 61, 62; 1912, 1932) für jedes der Schneidgeräte (1814, 1824; 401, 402; 1914, 1934) vorgesehen ist, und
ein geschnittenes Substrat, das durch eine Schneidvorrichtung von einem der Schneidgeräte (1814; 401; 1914) geschnitten worden ist, durch eines der Substrattragegeräte (1812; 61; 1912), das zu dem Schneidgerät korrespondiert (1814; 401; 1914), zu dem anderen Substrattragegerät (1822; 62; 1932) getragen wird, um durch eine andere Schneidvorrichtung geschnitten zu werden, die in Übereinstimmung mit dem anderen Schneidgerät (1824; 402; 1934) vorgesehen ist.

12. System zum Schneiden eines Substrats eines geklebten Substrats nach Anspruch 11, wobei die Substrattragegeräte (1812, 1822) derart vorgesehen sind, dass Tragerichtungen für das geklebte Substrat und das geschnittene Substrat durch die Substrattragegeräte (1812, 1822) senkrecht zueinander sind.

13. System zum Schneiden eines Substrats eines geklebten Substrats nach Anspruch 11, wobei:
die Substrattragegeräte (61, 62; 1912, 1932) das geklebte Substrat tragen, wobei eine Oberfläche des geklebten Substrats parallel zu der Vertikalrichtung ist; und
die erste Schneidvorrichtung und die zweite Schneidvorrichtung des Schneidgeräts (401, 402; 1914, 1934) das getragene geklebte Substrat entlang der Vertikalrichtung schneiden.

14. System zum Schneiden eines Substrats eines geklebten Substrats nach Anspruch 13, mit einem Paar der Schneidgeräte (401, 402; 1914, 1934) und des Weiteren mit einem Drehtragegerät (71; 1920) zum Drehen eines geschnittenen Substrats, das durch eines der Schneidgeräte (401; 1914) geschnitten worden ist, in einer Richtung senkrecht zu der Vertikalrichtung,
wobei das geschnittene Substrat, das durch das Drehtragegerät (71; 1920) gedreht wird, durch das andere Schneidgerät (402; 1934) entlang der Vertikalrichtung geschnitten wird.

15. System zum Schneiden eines Substrats eines geklebten Substrats nach Anspruch 14, des Weiteren mit einem Ritzgerät (81) zum Ausbilden eines Anschlussabschnitts in dem geschnittenen Substrat, das durch das andere Schneidgerät (402) geschnitten worden ist.

16. System zum Schneiden eines Substrats eines geklebten Substrats nach Anspruch 14, des Weiteren mit einem Schneidgerät (1954) zum Ausbilden eines Anschlussabschnitts in dem geschnittenen Substrat, das durch das andere Schneidgerät (1934) geschnitten worden ist.

17. Substratschneidverfahren zum Schneiden eines geklebten Substrats, das durch Kleben eines ersten Substrats und eines zweiten Substrats ausgebildet ist, in eine Vielzahl von geschnittenen Substraten durch ein Substratschneidsystem (100; 1500; 1800; 1000; 1900), wobei das Substratschneidsystem (100; 1500; 1800; 1000; 1900) Folgendes aufweist:
ein Schneidgerät (400; 1700; 1814, 1824; 401, 402; 1914, 1934, 1954) mit einer ersten Schneidvorrichtung (410; 1712, 1722, 1732), die angeordnet ist, um dem ersten Substrat zugewandt zu sein,
wobei die erste Schneidvorrichtung (410; 1712, 1722, 1732) eine Fläche des ersten Substrats stützt,
**gekennzeichnet, durch**
eine zweite Schneidvorrichtung (430; 1714, 1724, 1734), die angeordnet ist, um dem zweiten Substrat zugewandt zu sein; und wobei
die erste Schneidvorrichtung (410; 1712, 1722, 1732) eine Fläche des ersten Substrats, wenn das zweite Substrat **durch** die zweite Schneidvorrichtung (430; 1714, 1724, 1734) geritzt wird, in Übereinstimmung mit dem zu ritzenden Abschnitt stützt und eine Fläche des ersten Substrats, wenn das zweite Substrat **durch** eine Brecheinrichtung (416) des Brechabschnitts (1416) der zweiten Schneidvorrichtung (430; 1714, 1724, 1734) geschnitten wird, in Übereinstimmung mit dem zu schneidenden Abschnitt stützt, und
die zweite Schneidvorrichtung (430; 1714, 1724, 1734) eine Fläche des zweiten Substrats, wenn das erste Substrat **durch** die erste Schneidvorrichtung (410; 1712, 1722, 1732) geritzt wird, in Übereinstimmung mit dem zu ritzenden Abschnitt stützt und eine Fläche des zweiten Substrats, wenn das erste Substrat **durch** eine Brecheinrichtung (416) des Brechabschnitts (1416) der ersten Schneidvorrichtung (410; 1712, 1722, 1732) geschnitten wird, in Übereinstimmung mit dem zu schneidenden Abschnitt stützt.

18. Verfahren zum Schneiden eines Substrats eines geklebten Substrats nach Anspruch 17, wobei zu schneidende Linien des geklebten Substrats, das durch ein Substrattragegerät (300; 1550; 1812, 1822; 61, 62; 1912, 1932) gehalten wird, sequenziell zu vorbestimmten Positionen in Bezug auf das Schneidgerät (400; 1700; 1814, 1824; 401, 402; 1914, 1934, 1954) positioniert werden, und das geklebte Substrat sequenziell entlang den zu schneidenden Linien geschnitten wird.

19. Verfahren zum Schneiden eines Substrats eines geklebten Substrats nach Anspruch 18, wobei:
das Substrattragegerät (300; 1550; 1812, 1822; 61, 62; 1912, 1932) eine Vielzahl von Tischen (331; 1531; 65) aufweist; und
vor dem Schneiden die Anzahl von Tischen (331; 1531; 65), die bewegt werden, gemäß einem Schneidmuster des geklebten Substrats ausgewählt werden, Abstände zwischen den Tischen (331; 1531; 65) derart festgelegt werden, dass die zweite Schneidvorrichtung (430; 1714, 1724, 1734) entlang einer zu schneidenden Linie des geklebten Substrats bewegt wird, und das geklebte Substrat an den ausgewählten Tischen (331; 1531; 65) gehalten wird.

20. Verfahren zum Schneiden eines Substrats eines geklebten Substrats nach Anspruch 19, wobei die Tische (331; 1531; 65), die geschnittene Substrate halten, sich sequenziell zu einer Materialentfernungsposition für die geschnittenen Substrate nach dem Schneiden bewegen.

21. Verfahren zum Schneiden eines Substrats eines geklebten Substrats nach Anspruch 17, wobei die Brecheinrichtung (416), die in jeder von der ersten Schneidvorrichtung (410; 1712, 1722, 1732) und der zweiten Schneidvorrichtung (430; 1714, 1724, 1734) enthalten sind, beide Seiten der Ritzlinie drückt.

22. Verfahren zum Schneiden eines Substrats eines geklebten Substrats nach einem der Ansprüche 17 bis 21, des Weiteren mit:
einer Stützrolle (1471-1473), die in der zweiten Schneidvorrichtung (430; 1714, 1724, 1734) umfasst ist; und
einem Riemen (1474A), der um die Stützrolle (1471-1473) gewickelt ist,
wobei ein Abschnitt des geklebten Substrats, das geschnitten worden ist, gestützt wird, wenn sich die zweite Schneidvorrichtung (430; 1714, 1724, 1734), die einen Schneidprozess durchführt, bewegt.

23. Verfahren zum Schneiden eines Substrats eines geklebten Substrats nach Anspruch 17, wobei eine Vielzahl von Schneidvorrichtungen (410, 430; 1712, 1722, 1732, 1714, 1724, 1734) vorgesehen ist, und sich die Schneidvorrichtungen (410, 430; 1712, 1722, 1732, 1714, 1724, 1734) einstückig bewegen und das geklebte Substrat entlang einer Vielzahl von zu schneidenden Linien des geklebten Substrats schneiden.

24. Verfahren zum Schneiden eines Substrats eines geklebten Substrats nach Anspruch 17, wobei:
ein Paar der Schneidgeräte (1814, 1824; 401, 402; 1914, 1934) vorgesehen ist und das Substrattragegerät (1812, 1822; 61, 62; 1912, 1932) für jedes der Schneidgeräte (1814, 1824; 401, 402; 1914; 1934) vorgesehen ist, und
ein geschnittenes Substrat, das durch eine Schneidvorrichtung von einem der Schneidgeräte (1814; 401; 1914) geschnitten worden ist, durch eines der Substrattragegeräte (1812; 61; 1912), das zu dem Schneidgerät (1814; 401; 1914) korrespondiert, zu dem anderen Substrattragegerät (1822; 62; 1932) getragen wird, um durch eine andere Schneidvorrichtung geschnitten zu werden, die in Übereinstimmung mit dem anderen Schneidgerät (1824; 402; 1934) vorgesehen ist.

25. Verfahren zum Schneiden eines Substrats eines geklebten Substrats nach Anspruch 24, wobei die Substrattragegeräte (1812, 1822) derart vorgesehen sind, dass Tragerichtungen für das geklebte Substrat und das geschnittene Substrat durch die Substrattragegeräte (1812, 1822) senkrecht zueinander sind.

26. Verfahren zum Schneiden eines Substrats eines geklebten Substrats nach Anspruch 24, wobei:
die Substrattragegeräte (61, 62; 1912, 1932) das geklebte Substrat tragen, wobei eine Fläche des geklebten Substrats parallel zu der Vertikalrichtung ist; und
die erste Schneidvorrichtung und die zweite Schneidvorrichtung des Schneidgeräts (401, 402; 1914, 1934) das getragene geklebte Substrat entlang der Vertikalrichtung schneiden.

27. Verfahren zum Schneiden eines Substrats eines geklebten Substrats nach Anspruch 26, mit einem Paar der Schneidgeräte (401, 402; 1914, 1934) und des Weiteren mit einem Drehtragegerät (71; 1920) zum Drehen eines geschnittenen Substrats, das durch eines der Schneidgeräte (401; 1914) geschnitten worden ist, in einer Richtung senkrecht zu der Vertikalrichtung,
wobei das geschnittene Substrat, das durch das Drehtragegerät (71; 1920) gedreht wird, durch das andere Schneidgerät (402; 1934) entlang der Vertikalrichtung geschnitten wird.

## Revendications

1. Système (100 ; 1500 ; 1800 ; 1000 ; 1900) de coupe d'un substrat pour couper un substrat lié formé par liaison d'un premier substrat et d'un deuxième substrat en une pluralité de substrats coupés, le système de coupe de substrat du substrat lié comprenant :
un appareil de coupe (400 ; 1700 ; 1814, 1824 ; 401, 402 ; 1914, 1934, 1954) comprenant
un premier dispositif de coupe (410 ; 1712, 1722, 1732) placé de sorte à être en vis-à-vis du premier substrat, où
le premier dispositif de coupe (410 ; 1712, 1722, 1732) comprend une partie de séparation (1412) où un premier moyen de séparation (412) pour former une ligne de séparation sur le premier substrat est prévu,
le premier dispositif de coupe (410 ; 1712, 1722, 1732) comprend en outre une partie de support (1414) pour soutenir une surface du premier substrat et une partie de rupture (1416) pour couper le premier substrat le long de la ligne de séparation formée sur le premier substrat,
**caractérisé par**
un deuxième dispositif de coupe (430 ; 1714, 1724, 1734) placé de sorte à être en vis-à-vis du deuxième substrat ; où
le deuxième dispositif de coupe (430 ; 1714, 1724, 1734) comprend une partie de séparation (1412) où un deuxième moyen de séparation (412) pour former une ligne de séparation sur le deuxième substrat est fourni,
la partie de support (1414) du premier dispositif de coupe (410 ; 1712, 1722, 1732) soutient une surface du premier substrat lorsque le deuxième moyen de séparation (412) de la partie de séparation (1412) du deuxième dispositif de coupe (430 ; 1714, 1724, 1734) sépare le deuxième substrat, en correspondance avec la partie à séparer, et
le deuxième dispositif de coupe (430 ; 1714, 1724, 1734) comprend en outre une partie de support (1414) pour soutenir une surface du deuxième substrat lorsque le premier moyen de séparation (412) de la partie de séparation (1412) du premier dispositif de coupe (410 ; 1712, 1722, 1732) sépare le premier substrat, en correspondance avec la partie à séparer, et une partie de rupture (1416) pour couper le deuxième substrat le long de la ligne de séparation formée sur le deuxième substrat.

2. Système de coupe de substrat d'un substrat lié selon la revendication 1, dans lequel :
le premier dispositif de coupe (410 ; 1712, 1722, 1732) place la partie de support (1414) de sorte à soutenir une surface du premier substrat lorsqu'un moyen de rupture (416) de la partie de rupture (1414) du deuxième dispositif de coupe (430 ; 1714, 1724, 1734) coupe le deuxième substrat, en correspondance avec la partie à couper ; et
le deuxième dispositif de coupe (430 ; 1714, 1724, 1734) place la partie de support (1414) de sorte à soutenir une surface du deuxième substrat lorsque le moyen de rupture (416) de la partie de rupture (1416) du premier dispositif de coupe (410 ; 1712, 1722, 1732) coupe le premier substrat, en correspondance avec la partie à couper.

3. Système de coupe de substrat d'un substrat lié selon la revendication 1, comprenant en outre un appareil de transport de substrat (300 ; 1550 ; 1812, 1822 ; 61, 62 ; 1912, 1932) qui positionne de façon séquentielle des lignes à couper du substrat lié par rapport à l'appareil de coupe (400 ; 1700 ; 1814, 1824 ; 401, 402 ; 1914, 1934, 1954).

4. Système de coupe de substrat d'un substrat lié selon la revendication 3, dans lequel l'appareil de transport de substrat (300 ; 1550 ; 1812, 1822; 61, 62 ; 1912, 1932) comprend une pluralité de tables (331 ; 1531 ; 65) .

5. Système de coupe de substrat d'un substrat lié selon la revendication 4, dans lequel les tables (331 ; 1531 ; 65) sont indépendamment mobiles.

6. Système de coupe de substrat d'un substrat lié selon la revendication 4, dans lequel les tables (331 ; 1531 ; 65) comprennent respectivement des trous d'adsorption (370) pour l'adsorption du substrat lié.

7. Système de coupe de substrat d'un substrat lié selon la revendication 1, dans lequel le moyen de rupture (416) fourni dans chacune des parties de rupture du premier dispositif de coupe (410 ; 1712, 1722, 1732) et du deuxième dispositif de coupe (430 ; 1714, 1724, 1734) presse les deux côtés de la ligne de séparation.

8. Système de coupe de substrat d'un substrat lié selon la revendication 7, dans lequel le moyen de rupture (416) consiste en des rouleaux ayant chacun une partie concave formée dessus.

9. Système de coupe de substrat d'un substrat lié selon la revendication 1, comprenant en outre :
des rouleaux d'appui (1471 ; 1473) compris dans le deuxième dispositif de coupe (430 ; 1714, 1724, 1734) ; et
une courroie (1474A) enroulée sur les rouleaux d'appui (1471 ; 1473),
où une partie du substrat lié qui a été coupé est soutenue comme le deuxième dispositif de coupe (430 ; 1714, 1724, 1734) effectuant un processus de coupe se déplace.

10. Système de coupe de substrat d'un substrat lié selon la revendication 1, comprenant une pluralité de dispositifs de coupe (410, 430 ; 1712, 1722, 1732, 1714, 1724, 1734), et
où les dispositifs de coupe sont mobiles solidairement dans une direction de la ligne de séparation.

11. Système de coupe de substrat d'un substrat lié selon la revendication 1, dans lequel :
une paire des appareils de coupe (1814, 1824 ; 401, 402 ; 1914, 1934) sont fournis et l'appareil de transport de substrat (1812, 1822 ; 1861, 62 ; 1912, 1932) est fourni pour chacun des appareils de coupe (1814, 1824 ; 401, 402 ; 1914, 1934), et
un substrat coupé qui a été coupé par un dispositif de coupe de l'un des appareils de coupe (1814 ; 401 ; 1914) est transporté par l'un des appareils de transport de substrat (1812 ; 61 ; 1912), qui correspond à l'appareil de coupe (1814 ; 401 ; 1914), à l'autre appareil de transport de substrat (1822 ; 62 ; 1932) à couper par un autre dispositif de coupe pourvu en correspondance avec l'autre appareil de coupe (1824 ; 402 ; 1934).

12. Système de coupe de substrat d'un substrat lié selon la revendication 11, dans lequel les appareils de transport de substrat (1812, 1822) sont fournis de sorte que les directions de transport pour le substrat lié et le substrat coupé par l'appareil de transport de substrat (1812, 1822) soient perpendiculaires l'une à l'autre.

13. Système de coupe de substrat d'un substrat lié selon la revendication 11, dans lequel :
les appareils de transport de substrat (61, 62 ; 1912, 1932) transportent le substrat lié avec une surface du substrat lié étant parallèle à la direction verticale ; et
le premier dispositif de coupe et le deuxième dispositif de coupe de l'appareil de coupe (401, 402 ; 1914, 1934) coupe le substrat lié transporté le long de la direction verticale.

14. Système de coupe de substrat d'un substrat lié selon la revendication 13, comprenant une paire des appareils de coupe (401, 402 ; 1914, 1934) et comprenant en outre un appareil de transport par rotation (71 ; 1920) pour mettre en rotation un substrat coupé qui a été coupé par l'un des appareils de coupe (401 ; 1914) dans une direction perpendiculaire à la direction verticale,
où le substrat coupé mis en rotation par l'appareil de transport par rotation (71 ; 1920) est coupé par l'autre appareil de coupe (402 ; 1934) le long de la direction verticale.

15. Système de coupe de substrat d'un substrat lié selon la revendication 14, comprenant en outre un appareil de séparation (81) pour former une partie terminale dans le substrat coupé qui a été coupé par l'autre appareil de coupe (402).

16. Système de coupe de substrat d'un substrat lié selon la revendication 14, comprenant en outre un appareil de coupe (1954) pour former une partie terminale dans le substrat coupé qui a été coupé par l'autre appareil de coupe (1934).

17. Procédé de coupe de substrat pour couper un substrat lié formé par une liaison d'un premier substrat et d'un deuxième substrat en une pluralité de substrats coupés par un système de coupe de substrat (100 ; 1500 ; 1800 ; 1000 ; 1900), dans lequel le système de coupe de substrat (100 ; 1500 ; 1800 ; 1000 ; 1900) comprend :
un appareil de coupe (400 ; 1700 ; 1814, 1824 ; 401, 402; 1914, 1934, 1954) comprenant
un premier dispositif de coupe (410 ; 1712, 1722, 1732) placé de sorte à être en vis-à-vis du premier substrat,
où le premier dispositif de coupe (410 ; 1712, 1722, 1732) soutient une surface du premier substrat, **caractérisé par**
un deuxième dispositif de coupe (430 ; 1714, 1724, 1734) placé de sorte à être en vis-à-vis du deuxième substrat, et
où le premier dispositif de coupe (410 ; 1712, 1722, 1732) soutient une surface du premier substrat lorsque le deuxième substrat est séparé par le deuxième dispositif de coupe (430 ; 1714, 1724, 1734), en correspondance avec la partie à séparer, et soutient une surface du premier substrat lorsque le deuxième substrat est enlevé par le moyen de rupture (416) de la partie de rupture (1416) du deuxième dispositif de coupe (430 ; 1714, 1724, 1734), en correspondance avec la partie à couper, et
le deuxième dispositif de coupe (430 ; 1714, 1724, 1734) soutient une surface du deuxième substrat lorsque le premier substrat est séparé par le premier dispositif de coupe (410 ; 1712, 1722, 1732), en correspondance avec la partie à séparer, et soutient une surface du deuxième substrat lorsque le premier substrat est coupé par un moyen de rupture (416) de la partie de rupture (1416) du premier dispositif de coupe (410 ; 1712, 1722, 1732), en correspondance avec la partie à couper.

18. Procédé de coupe de substrat d'un substrat lié selon la revendication 17, dans lequel des lignes à couper du substrat lié maintenu par un appareil de transport de substrat (300 ; 1550 ; 1812, 1822, 61, 62 ; 1912, 1932) sont positionnées de façon séquentielle à des positions prédéterminées par rapport à l'appareil de coupe (400 ; 1700 ; 1814, 1824 ; 401, 402 ; 1914, 1934, 1954), et le substrat lié est coupé de façon séquentielle le long des lignes à enlever.

19. Procédé de coupe de substrat d'un substrat lié selon la revendication 18, dans lequel :
l'appareil de transport de substrat (300 ; 1550 ; 1812 ; 1822 ; 61, 62 ; 1912, 1932) comprend une pluralité de tables (331 ; 1531 ; 65) ; et,
avant la coupe, le nombre de tables (331 ; 1531 ; 65) déplacées est sélectionné en conformité avec un modèle de coupe du substrat lié, les espaces entre les tables (331 ; 1531 ; 65) sont définis de sorte que le deuxième dispositif de coupe (430 ; 1714, 1724, 1734) se déplace le long d'une ligne à couper du substrat lié, et le substrat lié est maintenu sur les tables sélectionnées (331 ; 1531 ; 65).

20. Procédé de coupe de substrat d'un substrat lié selon la revendication 19, dans lequel les tables (331 ; 1531 ; 65) maintenant des substrats coupés de façon séquentielle se déplacent vers une position de retrait de matériel pour les substrats coupés après la coupe.

21. Procédé de coupe de substrat d'un substrat lié selon la revendication 17, dans lequel le moyen de rupture (416) compris dans chacun du premier dispositif de coupe (410 ; 1712, 1722, 1732) et du deuxième dispositif de coupe (430 ; 1714, 1724, 1734), presse les deux côtés de la ligne de séparation.

22. Procédé de coupe de substrat d'un substrat lié selon l'une quelconque des revendications 17 à 21, comprenant en outre :
un rouleau d'appui (1471 ; 1473) compris dans le deuxième dispositif de coupe (430 ; 1714, 1724, 1734) ; et
une courroie (1474A) enroulée sur le rouleau d'appui (1471, 1473),
où une partie du substrat lié qui a été coupé est soutenue comme le deuxième dispositif de coupe (430 ; 1714, 1724, 1734) effectuant un processus de coupe se déplace.

23. Procédé de coupe de substrat d'un substrat lié selon la revendication 17, dans lequel une pluralité de dispositifs de coupe (410, 430 ; 1712, 1722, 1732, 1714, 1724, 1734) sont fournis, et les dispositifs de coupe (410, 430 ; 1712, 1722, 1732, 1714, 1724, 1734) se déplacent solidairement et coupent le substrat lié le long d'une pluralité de lignes à enlever du substrat lié.

24. Procédé de coupe de substrat d'un substrat lié selon la revendication 17, dans lequel :
une paire des appareils de coupe (1814, 1824 ; 401, 402 ; 1914, 1934) sont fournis et l'appareil de transport de substrat (1812, 1822 ; 61, 62 ; 1912, 1932) est fourni pour chacun des appareils de coupe (1814, 1824 ; 401, 402 ; 1914, 1934), et
un substrat coupé qui a été coupé par un dispositif de coupe de l'un des appareils de coupe (1814 ; 401 ; 1914) est transporté par l'un des appareils de transport de substrat (1812 ; 61 ; 1912), qui correspond à l'appareil de coupe (1814 ; 401 ; 1914), à l'autre appareil de transport de substrat (1822 ; 62 ; 1932) à couper par un autre dispositif de coupe pourvu en correspondance avec l'autre appareil de coupe (1824 ; 402 ; 1934).

25. Procédé de coupe de substrat d'un substrat lié selon la revendication 24, dans lequel, les appareils de transport de substrat (1812, 1822) sont fournis de sorte que les directions de transport pour le substrat lié et le substrat coupé par les appareils de transport de substrat (1812, 1822) soient perpendiculaires l'une à l'autre.

26. Procédé de coupe de substrat d'un substrat lié selon la revendication 24, dans lequel :
les appareils de transport de substrat (61, 62 ; 1912, 1932) transportent le substrat lié avec une surface du substrat lié étant parallèle à la direction verticale ; et
le premier dispositif de coupe et le deuxième dispositif de coupe de l'appareil de coupe (401, 402 ; 1914, 1934) coupent le substrat lié transporté le long de la direction verticale.

27. Procédé de coupe de substrat d'un substrat lié selon la revendication 26, comprenant une paire des appareils de coupe (401, 402 ; 1914, 1934) et comprenant en outre un appareil de transport par rotation (71 ; 1920) pour mettre en rotation un substrat coupé qui a été coupé par l'un des appareils de coupe (401 ; 1914) dans une direction perpendiculaire à la direction verticale,
où le substrat coupé mis en rotation par l'appareil de transport par rotation (71 ; 1920) est coupé par l'autre appareil de coupe (402 ; 1934) le long de la direction verticale.
